# EUROPEAN PATENT APPLICATION

(11) **EP 4 664 943 A1**
(43) Date of publication of application: **17.12.2025**
(21) Application number: 24753165.0
(22) Date of filing: 29.01.2024
(51) Int. Cl.: H04W 4/50, H04W 8/22, H04W 28/24, H04W 36/08, H04W 88/02, H04W 88/08

(54) **COMMUNICATION DEVICE AND COMMUNICATION METHOD**

(30) Priority: 08.02.2023 JP 2023017694
(71) Applicant: Sony Group Corporation, Tokyo 108-0075 (JP)
(72) Inventor: MATSUDA, Hiroki, Tokyo 108-0075 (JP)
(74) Representative: Witte, Weller & Partner Patentanwälte mbB
(86) International application number: PCT/JP2024/002568
(87) International publication number: WO 2024/166721

(57) **Abstract**

A communication apparatus is an apparatus capable of executing processing of a plurality of functionalities related to communication with another communication apparatus. The communication apparatus includes a management unit configured to perform management of an AI/ML model used in the processing, based on the functionalities.

## Description

### Field

The present disclosure relates to a communication apparatus and a communication method.

### Background

Technologies related to wireless communication have been actively developed. In recent years, there have been studies of techniques of improving communication performance by applying artificial intelligence and machine learning techniques to a radio access network.

### Citation List

### Non Patent Literature

Non Patent Literature 1: R1-2210997, "Discussions on AI/ML framework", vivo, 3GPP TSG-RAN WG1 Meeting #111, Toulouse, France, November 14th-18th, 2022

### Summary

### Technical Problem

However, simply applying the artificial intelligence/machine learning techniques to the radio access network will not necessarily lead to the achievement of high communication performance (for example, improvement in frequency utilization efficiency, larger capacity, higher speed, lower latency, higher reliability, lower power consumption, or lower processing load).

In view of this, the present disclosure proposes a communication apparatus, and a communication method capable of achieving high communication performance.

Note that the above problem or target is merely one of a plurality of problems or targets that can be solved or achieved by a plurality of embodiments disclosed in the present specification.

### Solution to Problem

In order to solve the above problem, a communication apparatus according to one embodiment of the present disclosure capable of executing processing of a plurality of functionalities related to communication with another communication apparatus, the communication apparatus includes: a management unit configured to perform management of an AI/ML model used in the processing, based on the functionalities.

### Brief Description of Drawings

FIG. 1 is a diagram illustrating an example of functionality.
FIG. 2 is a diagram illustrating an example of functionality.
FIG. 3 is a diagram illustrating an example of functionality.
FIG. 4 is a diagram illustrating a configuration of a communication system according to the present embodiment.
FIG. 5 is a diagram illustrating a configuration of a management apparatus according to the present embodiment.
FIG. 6 is a diagram illustrating a configuration of a base station according to the present embodiment.
FIG. 7 is a diagram illustrating a configuration of a relay station according to the present embodiment.
FIG. 8 is a diagram illustrating a configuration of a terminal apparatus according to the present embodiment.
FIG. 9 is a diagram illustrating an example of 5G architecture.
FIG. 10 is a diagram illustrating a representative sequence example of communication processing of the present embodiment.
FIG. 11 is a diagram illustrating a sequence example in a case where a handover is performed.
FIG. 12 is a diagram illustrating a sequence example in a case where a handover is performed.
FIG. 13 is a flowchart illustrating management processing executed by a terminal apparatus.
FIG. 14 is a flowchart illustrating management processing executed by a base station.

### Description of Embodiments

Embodiments of the present disclosure will be described below in detail with reference to the drawings. In each of the following embodiments, the identical sites are denoted by identical reference symbols, and a repetitive description thereof will be omitted.

Moreover, in the present specification and the drawings, a plurality of components having substantially the same functional configuration will be distinguished by attaching different alphabets or numbers after the same reference numerals. For example, a plurality of configurations having substantially the same functional configuration are distinguished as necessary, such as terminal apparatuses 40₁, 40₂, and 40₃. However, when it is not particularly necessary to distinguish between the plurality of components having substantially the same functional configuration, only the same reference numeral is given. For example, in a case where it is not necessary to particularly distinguish the terminal apparatuses 40₁, 40₂, and 40₃, they are simply referred to as the terminal apparatus 40.

One or a plurality of embodiments (including implementation examples and modifications) described below can each be implemented independently. On the other hand, at least some of the plurality of embodiments described below may be appropriately combined with at least some of other embodiments. The plurality of embodiments may include novel features different from each other. Accordingly, the plurality of embodiments can contribute to achieving or solving different objects or problems, and can exhibit different effects.

The present disclosure will be described in the following order of items.
1. Overview
1-1. Problem
1-2. Solution
2. Configuration of communication system
2-1. Configuration of management apparatus
2-2. Configuration of base station
2-3. Configuration of relay station
2-4. Configuration of terminal apparatus
2-5. AI/ML model
3. Network Architecture
4. Operation of communication system
4-1. LCM
4-2. LCM Implementation
4-3. Operation of entity
4-4. Discerning functionality
4-5. Controlling LCM
4-6. Operation during handover
4-7. Sequence example
4-8. Management processing example
5. Modification
6. Conclusion

### <<1. Overview>>

Before describing the present embodiment in detail, an outline of the present embodiment will be described.

### <1-1. Problem>

In 3GPP (registered trademark), Beyond 5G and 6G have been studied. The Beyond 5G and 6G are mobile communications technologies that are next generation technologies of 5G. The Beyond 5G and 6G are expected to achieve further improvements in high speed and high capacity (Enhanced Mobile Broadband (eMBB)), Massive Machine Type Communications (mMTC), and Ultra Reliable and Low Latency Communications (URLLC).

In order to realize this, 3GPP has been studying techniques of improving communication performance using artificial intelligence (AI)/machine learning (ML). For example, studies have been made to improve frequency efficiency by applying an AI/ML model to a radio access network.

However, simply using artificial intelligence/machine learning will not necessarily lead to the achievement of high communication performance (for example, improvement in frequency utilization efficiency, larger capacity, higher speed, lower latency, higher reliability, lower power consumption, or lower processing load).

For example, in applying the AI/ML model in a radio access network, it is assumed that the AI/ML model is utilized in various use cases. The AI/ML model can be applied in various application means depending on the use case to be utilized. This makes it necessary to change the method of managing the AI/ML model for each use case according to the situation. On the other hand, with an increased number of use cases to which the AI/ML model is applied and with various methods of managing the AI/ML model to be switched independently for each use case, there will be problems for the terminal apparatus, such as an increase in processing load and an increase in memory capacity for managing the AI/ML model. This leads to the necessity to efficiently manage the AI/ML model in communication utilizing the AI/ML model.

### <1-2. Solution>

In view of these, the present embodiment proposes to solve the above problem as follows.

Before describing the outline of the solution, functionality and management of the AI/ML model, which are important elements in the present embodiment, will be described.

### <1-2-1. Functionality>

First, functionality will be described.

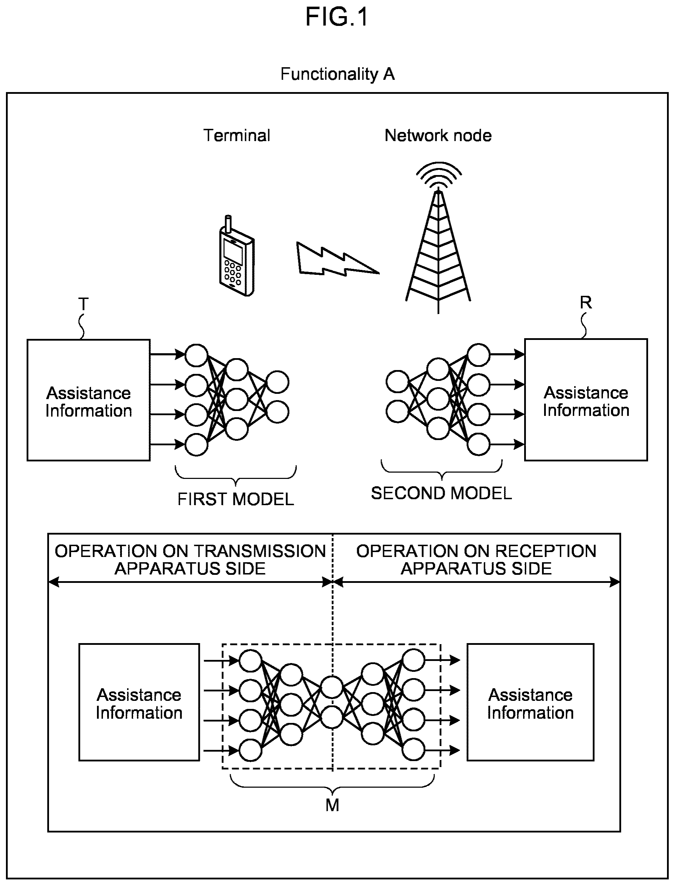

The functionality is a concept representing a use case utilizing an AI/ML model and a function realized using the AI/ML model. FIGS. 1 to 3 are diagrams each illustrating an example of functionality.

FIG. 1 illustrates functionality A related to transmission of information. In the example of FIG. 1, assistance information is transmitted from a transmission apparatus (a terminal apparatus in the example of FIG. 1) to a reception apparatus (a network node in the example of FIG. 1). The assistance information is information necessary for the reception apparatus to perform processing related to wireless communication or information for assisting processing related to wireless communication, performed by the reception apparatus. For example, the assistance information is information (for example, control information) necessary for operations such as uplink data transmission, sidelink transmission, unlicensed communication, and handover (Hand Over) of the terminal apparatus. In functionality A, both the transmission apparatus and the reception apparatus use the AI/ML model, thereby enabling efficient information transmission from the transmission apparatus to the reception apparatus.

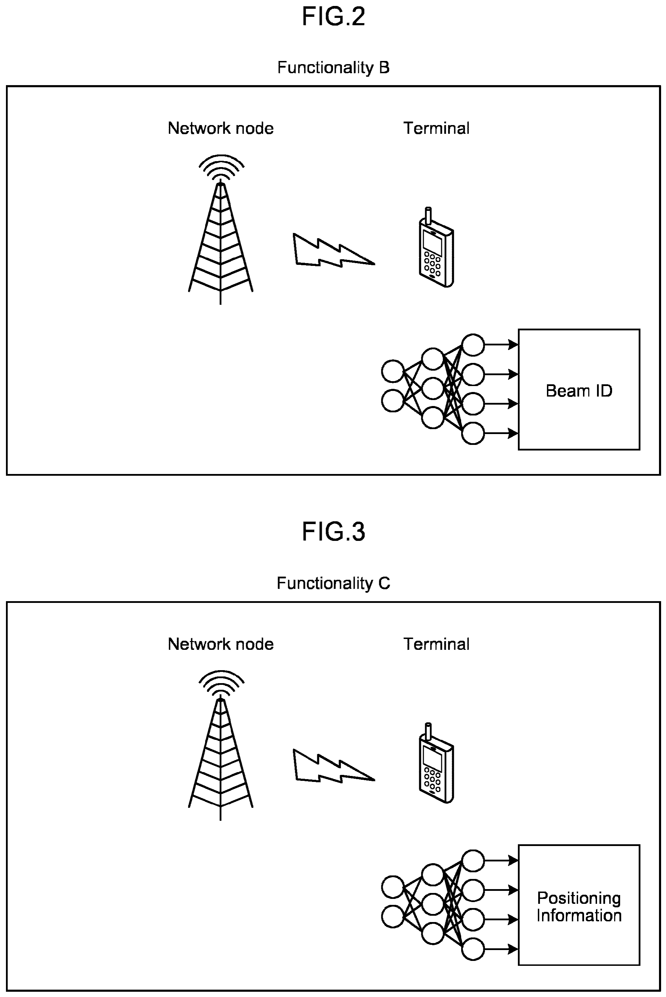

FIG. 2 illustrates functionality B related to identification of beam IDs. In the example of FIG. 2, the reception apparatus (the terminal in the example of FIG. 2) identifies the beam ID based on information/signals transmitted from the transmission apparatus (the network node in the example of FIG. 2). In functionality B, the reception apparatus identifies the beam ID using an AI/ML model.

FIG. 3 illustrates functionality C related to positioning. In the example of FIG. 3, the reception apparatus (the terminal in the example of FIG. 3) generates positioning information based on information/signals transmitted from the transmission apparatus (the network node in the example of FIG. 3). In functionality C, the reception apparatus generates positioning information by using an AI/ML model.

The notation of functionality appearing in the following description may be replaced with another notation. For example, the functionality appearing in the following description may be replaced with other notations such as a use case, a function, a function index, functional ID, an AI/ML index, an AI index, an ML index, or a model index. The notation of functionality is not limited thereto, and may be replaced with another term representing the use case utilizing an AI/ML model or representing the function realized by using an AI/ML model, for example.

### <1-2-2. Management of AI/ML model>

Next, management of the AI/ML model will be described.

In 3GPP, management of an AI/ML model has been studied (for example, RP-221347). In the present embodiment, management of the AI/ML model may be referred to as life-cycle-management (LCM). LCM may be configured by, for example, one or a plurality of processes/methods/procedures selected from the following (M1) to (M16).
(M1) Data collection
(M2) Model training
(M3) Model identification
(M4) Model delivery
(M5) Model transfer
(M6) Model download
(M7) Model upload
(M8) Model inference
(M9) Model validation
(M10) Model testing
(M11) Model activation
(M12) Model deactivation
(M13) Model switching
(M14) Model fallback
(M15) Model monitoring
(M16) Model update

Note that (M1) to (M16) are merely examples. The LCM may include those other than the above-described implementation examples ((M1) to (M16)). (M1) to (M16) will be described in detail later.

### <1-2-3. Outline of solution>

Based on the above, an outline of the solution of the present embodiment will be described.

The communication apparatus (for example, a base station or a terminal apparatus) according to the present embodiment is configured to be capable of executing processing of a plurality of functionalities. For example, the communication apparatus according to the present embodiment is configured to be capable of executing processing related to transmission or reception of assistance information, processing related to identification of beam ID, and processing related to positioning. The processing of functionality is realized using an AI/ML model. One or plurality of AI/ML models are associated with one functionality item.

The communication apparatus according to the present embodiment performs management (LCM) of an AI/ML model used in processing of a functionality, based on the functionality. For example, the communication apparatus performs management of the AI/ML model for each use case or for each function. At this time, the communication apparatus may perform management of at least one functionality (LCM) of the plurality of functionalities, independently of management of another functionality (LCM). Furthermore, the communication apparatus may perform management of all functionalities (LCM) in association with each other. Furthermore, the communication apparatus may perform management (LCM) of some of the plurality of functionalities in association with each other.

In this manner, in the present embodiment, the management of the AI/ML model is performed based on the functionality. This makes it possible for the communication apparatus to perform efficient management of the AI/ML model, leading to achievement of high communication performance.

The outline of the present embodiment has been described above. Hereinafter, a communication system 1 of the present embodiment will be described in detail.

### <<2. Configuration of communication system>>

First, a configuration of the communication system 1 will be described.

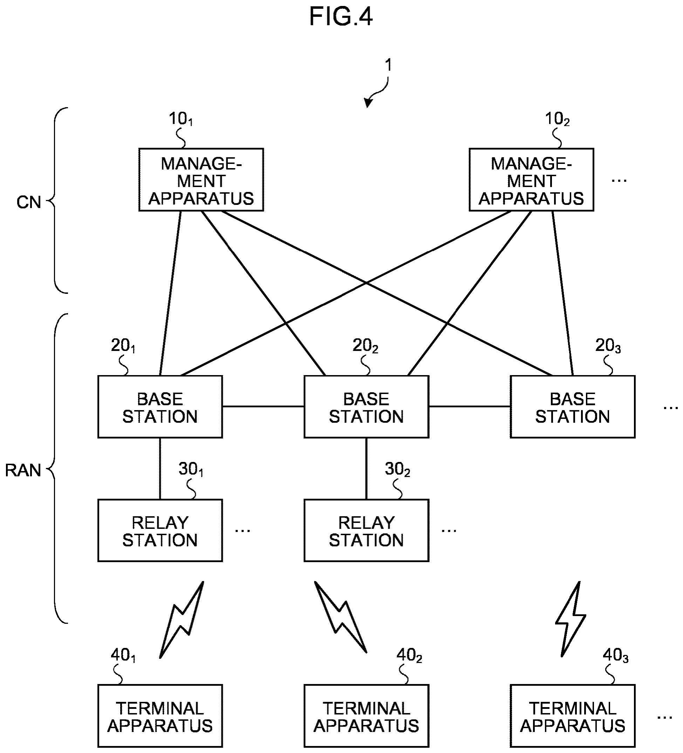

FIG. 4 is a diagram illustrating a configuration example of a communication system 1 according to the present embodiment. The communication system 1 includes a management apparatus 10, a base station 20, a relay station 30, and a terminal apparatus 40. With individual wireless communication apparatuses constituting the communication system 1 operating in cooperation with each other, the communication system 1 provides a user with a wireless network capable of mobile communication. The wireless network of the present embodiment includes a radio access network RAN and a core network CN, for example. In the present embodiment, the wireless communication apparatus is an apparatus having a wireless communication function, and in the example of FIG. 4, the apparatus corresponds to the base station 20, the relay station 30, and the terminal apparatus 40.

The communication system 1 may include a plurality of management apparatuses 10, a plurality of base stations 20, a plurality of relay stations 30, and a plurality of terminal apparatuses 40. In the example of FIG. 1, the communication system 1 includes management apparatuses 10₁, and 10₂ as the management apparatus 10, and includes base stations 20₁, 20₂ and 20₃ as the base station 20. Furthermore, the communication system 1 includes relay stations 30₁ and 30₂ as the relay station 30, and includes terminal apparatuses 40₁, 40₂, and 40₃ as the terminal apparatus 40.

The terminal apparatus 40 may be configured to connect to the network using a Radio Access Technology (RAT) such as Long Term Evolution (LTE), New Radio (NR), 6G, Wi-Fi, or Bluetooth (registered trademark). At this time, the terminal apparatus 40 may be configured to be able to use different radio access technologies (wireless communication method). For example, the terminal apparatus 40 may be configured to be able to use NR and Wi-Fi. Furthermore, the terminal apparatus 40 may be configured to be able to use different cellular communication technologies (for example, LTE and NR, or 6G). LTE and NR are a type of cellular communication technology, and enable mobile communication of terminal apparatuses by using cellular arrangement of a plurality of areas covered by base stations. 6G is also a type of cellular communication technology, and enable mobile communication of terminal apparatuses by using cellular arrangement of a plurality of areas covered by base stations.

In the following, it is assumed that "LTE" includes LTE-advanced (LTE-A), LTE-advanced pro (LTE-A Pro), and evolved universal terrestrial radio access (EUTRA). In addition, it is assumed that NR includes new radio access technology (NRAT) and further EUTRA (FEUTRA). Note that one base station 20 may manage a plurality of cells. In the following, a cell corresponding to LTE may be referred to as an LTE cell, and a cell corresponding to NR may be referred to as an NR cell.

NR is the next generation (fifth generation) radio access technology subsequent to LTE (fourth generation communication including LTE-Advanced and LTE-Advanced Pro). The NR is a radio access technology that can support various use cases including enhanced mobile broadband (eMBB), massive machine type communications (mMTC), and Ultra-Reliable and Low Latency Communications (URLLC). NR is standardized by Rel-15 of 3GPP (registered trademark), etc., as a technical framework supporting a usage scenario, a requirements, a deployment scenario, and the like in these use cases. Furthermore, Beyond 5G and 6G are required to simultaneously achieve a plurality of axes of high speed and large capacity, low latency/high reliability, and multiple simultaneous connection.

6G is a cellular communication technology of a next generation of NR or 5GS (5G system) that is fifth generation mobile communication, and includes a radio access technology and a network technology between a base station, a core network, and a data network. 6G may include advanced technologies (extreme connectivity) in each of eMBB, mMTC, and URLLC, which have been defined as a main use case or a requirement in NR, and new technologies (for example, AI (including Cognitive network and AI native Air Interface), sensing (Rader sensing, including network as a sensor), and Terahertz communication) in new aspects. Regarding 6G, the standard specification studies will start in 3GPP from around 2025, the formulation of the initial specification will be completed in around 2028, and will possibly be commercialized in or after 2030.

The wireless network may be compatible with a radio access technology (RAT) such as long term evolution (LTE), new radio (NR) and 6G. LTE, NR, and 6G are a type of cellular communication technology, and enable mobile communication of terminal apparatuses by using cellular arrangement of a plurality of areas covered by base stations. The radio access method used by the communication system 1 is not limited to LTE, NR, or 6G, and may be other radio access methods such as wideband code division multiple access (W-CDMA) and code division multiple access 2000 (cdma2000), for example.

The base station 20 and the relay station 30 may each be a terrestrial station or a non-terrestrial station. The non-terrestrial station may be a satellite station or an aircraft station. When the non-terrestrial station is a satellite station, the wireless network may be a Bent-pipe (Transparent) mobile satellite communication system.

In the present embodiment, the terrestrial station (also referred to as a terrestrial base station) refers to a base station or a relay station installed on the terrestrial. The "ground" represents not only a land but also a terrestrial location in a broad sense including underground, above-water, and underwater. Note that, in the following description, the description of "terrestrial station" may be referred to as a "gateway".

The base station in LTE may be referred to as Evolved Node B (eNodeB) or eNB. NR base stations may be referred to as gNodeB or gNB. 6G base stations may be referred to as 6G NodeB (6GNB). In LTE, NR, and 6G, a terminal apparatus (also referred to as a mobile station, or terminal) may be referred to as User Equipment (UE). The terminal apparatus is a type of communication apparatus, and is also referred to as a mobile station or a terminal.

The terminal apparatus 40 may be connectable to the network using a radio access technology (wireless communication method) other than LTE, NR, 6G, Wi-Fi, or Bluetooth. For example, the terminal apparatus 40 may be connectable to the network by using low power wide area (LPWA) communication. Furthermore, the terminal apparatus 40 may be connectable to the network using wireless communication of a proprietary standard.

Here, LPWA communication is wireless communication that enables low-power wide-range communication. For example, the LPWA wireless is Internet of Things (IoT) wireless communication using a specified low power wireless (for example, the 920 MHz band) or an Industry-Science-Medical (ISM) band. The LPWA communication used by the terminal apparatus 40 may conform to the LPWA standard. Examples of the LPWA standard include ELTRES, ZETA, SIGFOX, LoRaWAN, and NB-Iot. Needless to say, the LPWA standard is not to be limited thereto, and may be other LPWA standards.

Each wireless communication apparatus in FIG. 2 may be considered as an apparatus in a logical sense. That is, a part of each wireless communication apparatus may be implemented by a virtual machine (VM), a container, a docker, or the like, and they may be implemented on physically the same piece of hardware.

In the present embodiment, the concept of the "wireless communication apparatus" includes not only a portable mobile apparatus (terminal apparatus) such as a mobile terminal but also an apparatus installed in a structure or a mobile body. The structure or a mobile body itself may be regarded as a wireless communication apparatus. In addition, the concept of the wireless communication apparatus includes not only the terminal apparatus 40 but also the base station 20 and the relay station 30. The wireless communication apparatus is a type of processing apparatus and information processing apparatus. The wireless communication apparatus can be rephrased as a transmission apparatus or a reception apparatus.

In the present embodiment, the resource indicates, for example, Frequency, Time, Resource Element (including REG, CCE, CORESET), Resource Block, Bandwidth Part, Component Carrier, Symbol, Sub-Symbol, Slot, Mini-Slot, Subslot, Subframe, Frame, PRACH occasion, Occasion, Code, Multi-access physical resource, Multi-access signature, and Subcarrier Spacing (Numerology), and the like.

Hereinafter, configurations of individual wireless communication apparatuses included in the communication system 1 will be specifically described. The configuration of each wireless communication apparatus illustrated below is just an example. The configuration of each wireless communication apparatus may differ from the configuration below.

### <2-1. Configuration of management apparatus>

The management apparatus 10 is an information processing apparatus (computer) that manages a wireless network. For example, the management apparatus 10 is an information processing apparatus that manages communication of the base station 20. The management apparatus 10 may be an apparatus having a function as a Mobility Management Entity (MME), for example. The management apparatus 10 may be an apparatus having a function as an Access and Mobility Management Function (AMF) and/or a Session Management Function (SMF). The MME, the AMF, and the SMF are control plane network function nodes in the core network. The management apparatus 10 may be an apparatus having a function as a 6G control plane network function (6G CPNF). The 6G CPNF include one or a plurality of logical nodes.

The functions of the management apparatus 10 are not to be limited to MME, AMF, SMF, or 6G CPNF. The management apparatus 10 may be an apparatus having a function as a Network Slice Selection Function (NSSF), an Authentication Server Function (AUSF), a Policy Control Function (PCF), or Unified Data Management (UDM). Furthermore, the management apparatus 10 may be an apparatus having a function as a Home Subscriber Server (HSS).

Note that the management apparatus 10 may have a function of a gateway. For example, the management apparatus 10 may have a function as a Serving Gateway (S-GW) or a Packet Data Network Gateway (P-GW). Furthermore, the management apparatus 10 may have a function as a User Plane Function (UPF). At this time, the management apparatus 10 may have a plurality of UPFs. The management apparatus 10 may be an apparatus having a function as a 6G user plane network function (6G UPNF).

The core network includes a plurality of network functions. Each network function may be integrated into one physical device or distributed to a plurality of physical devices. That is, the management apparatus 10 can be disposed in a plurality of devices as distributed arrangement. Furthermore, this distributed arrangement may be controlled to be performed dynamically. The base station 20 and the management apparatus 10 constitute one network, and provide a wireless communication service to the terminal apparatus 40. The management apparatus 10 is connected to the Internet, and the terminal apparatus 40 can use various services provided over the Internet via the base station 20.

Note that the management apparatus 10 does not necessarily have to be a device constituting a core network. For example, it is assumed that the core network is a core network of Wideband Code Division Multiple Access (W-CDMA) or Code Division Multiple Access 2000 (cdma 2000). At this time, the management apparatus 10 may be a device that functions as a Radio Network Controller (RNC).

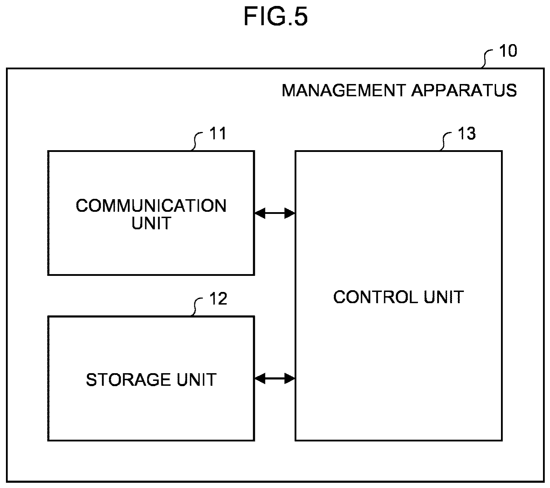

FIG. 5 is a diagram illustrating a configuration of the management apparatus 10 according to the present embodiment. The management apparatus 10 includes a communication unit 11, a storage unit 12, and a control unit 13. The configuration illustrated in FIG. 5 is a functional configuration, and the hardware configuration may be different from this. The functions of the management apparatus 10 may be implemented in a statically or dynamically distributed form in a plurality of physically separated configurations. The management apparatus 10 may be constituted with a plurality of server apparatuses.

The communication unit 11 is a communication interface for communicating with a wireless communication apparatus (for example, the base station 20 or the relay station 30). The communication unit 11 may be a network interface, or may be a device connection interface. The communication unit 11 may be a local area network (LAN) interface such as a network interface card (NIC), or may be a universal serial bus (USB) interface including a USB host controller, a USB port, and the like. The communication unit 11 may be a wired interface, or may be a wireless interface. The communication unit 11 functions as a communication means of the management apparatus 10. The communication unit 11 is controlled by the control unit 13.

The storage unit 12 is a readable/writable storage device such as dynamic random access memory (DRAM), static random access memory (SRAM), flash memory, or a hard disk. The storage unit 12 functions as a storage means in the management apparatus 10. The storage unit 12 stores, for example, a connection state of the terminal apparatus 40. The storage unit 12 stores a radio resource control (RRC) state or an EPS connection management (ECM) state or a 5G system connection management (CM) state of the terminal apparatus 40. The storage unit 12 may function as a unit referred to as "home memory" (user information database) that stores the location information of the terminal apparatus 40.

The control unit 13 is a controller that controls individual components of the management apparatus 10. The control unit 13 may be implemented by a processor such as a central processing unit (CPU) or a micro processing unit (MPU), for example. Specifically, the control unit 13 may be implemented by execution of various programs stored in the storage device inside the management apparatus 10 by the processor using random access memory (RAM) or the like as a work area. The control unit 13 may be implemented by an integrated circuit such as an application specific integrated circuit (ASIC) or a field programmable gate array (FPGA). Furthermore, the control unit 13 may be implemented by a Graphics Processing Unit (GPU). The CPU, MPU, ASIC, FPGA, and GPU can all be regarded as controllers. The control unit 13 may include a plurality of physically separated objects. For example, the control unit 13 may include a plurality of semiconductor chips.

### <2-2. Configuration of base station>

The base station 20 is a wireless communication apparatus that performs wireless communication with other wireless communication apparatuses (for example, the relay station 30, the terminal apparatus 40 or another base station 20). The base station 20 may wirelessly communicate with the terminal apparatus 40 via the relay station 30, or may directly perform wireless communication with the terminal apparatus 40.

The base station 20 is an apparatus corresponding to a radio base station (Base Station, Node B, eNB, gNB, or 6GNB, etc.) or a radio access point. The base station 20 may be a radio relay station. The base station 20 may be an optical link apparatus referred to as a Remote Radio Head (RRH). Furthermore, the base station 20 may be a receiving station such as a Field Pickup Unit (FPU). The base station 20 may be an Integrated Access and Backhaul (IAB) donor node or an IAB relay node that provides a radio access channel and a radio backhaul channel by using time division multiplexing, frequency division multiplexing, or space division multiplexing.

The radio access technology used by the base station 20 may be a cellular communication technology. The radio access technology used by the base station 20 may be a wireless LAN technology. For example, the radio access technology used by the base station 20 may be a low power wide area (LPWA) communication technology. Note that the radio access technology used by the base station 20 is not limited thereto, and may be other radio access technologies. The radio communication used by the base station 20 may be radio communication using a millimeter wave or radio communication using a terahertz wave (THz wave). The wireless communication used by the base station 20 may be wireless communication using radio waves or wireless communication (optical wireless communication) using infrared rays or visible light. The base station 20 may be capable of Non-Orthogonal Multiple Access (NOMA) communication with the terminal apparatus 40. Here, NOMA communication refers to communication (transmission, reception, or both) using non-orthogonal resources. Note that the base station 20 may be capable of performing NOMA communication with another base station 20.

The base station 20 may be capable of communicating with each other via a base station-core network interface (for example, NG Interface, S1 Interface, or the like). This interface may be implemented as wired or wireless interface. Furthermore, the base stations may be capable of performing mutual communication with each other by an inter-base station interface (for example, Xn Interface, X2 Interface, F1 Interface, or the like). This interface may be implemented as wired or wireless interface.

The base station (also referred to as a "base station apparatus") conceptually includes not only a donor base station but also a relay base station (also referred to as a "relay station"). The relay base station may be any one of RF Repeater, Smart Repeater, and Intelligent Surface. A base station conceptually includes not only a structure having a function of a base station but also a device installed in the structure.

Examples of the structure include a building such as a high-rise building, a house, a steel tower, a station facility, an airport facility, a harbor facility, an office building, a school building, a hospital, a factory, a commercial facility, or a stadium. The structure conceptually includes not only buildings but also non-building structures such as tunnels, bridges, dams, fences, and steel columns, as well as facilities such as cranes, gates, and windmills. The structure conceptually includes not only land-based (ground-based, in a narrow sense) structures or underground structures but also structures on the water, such as a jetty or a mega-float, and underwater structures such as an ocean observation facility. The base station can also be rephrased as an information processing apparatus.

The base station 20 may be a donor station or a relay station. The base station 20 may be a fixed station or a mobile station. The mobile station is a wireless communication apparatus (for example, a base station) configured to be movable. At this time, the base station 20 may be a device installed on a mobile body, or may be a mobile body itself. For example, a relay station having mobility can be regarded as the base station 20 as a mobile station. In addition, a device designed to have mobility, such as an Unmanned Aerial Vehicle (UAV) represented by a drone, or a smartphone, and having a function of a base station (at least a part of the function of a base station) also corresponds to the base station 20 as a mobile station.

Here, the mobile body may be a mobile terminal such as a smartphone or a mobile phone. The mobile body may be a mobile body that moves on the land (ground in a narrow sense) (for example, a vehicle such as an automobile, a motorcycle, a bus, a truck, a motorbike, a train, or a linear motor car), or a mobile body (for example, subway) that moves under the ground (for example, through a tunnel). The mobile body may be a mobile body that moves on the water (for example, a ship such as a passenger ship, a cargo ship, or a hovercraft), or a mobile body that moves underwater (for example, a submersible ship such as a submersible boat, a submarine, or an unmanned submarine). The mobile body may be a mobile body that moves in the atmosphere (for example, an aircraft such as an airplane, an airship, or a drone).

The base station 20 may be a terrestrial base station (terrestrial station) installed on the ground. The base station 20 may be a base station disposed on a structure on the ground, or may be a base station installed in a mobile body moving on the ground. The base station 20 may be an antenna installed in a structure such as a building and a signal processing apparatus connected to the antenna. The base station 20 may be a structure or a mobile body itself. The "ground" represents not only a land (ground in a narrow sense) but also a terrestrial location in a broad sense including underground, above-water, and underwater. The base station 20 is not limited to a terrestrial base station. In a case where the communication system 1 is a satellite communication system, the base station 20 may be an aircraft station. From the perspective of a satellite station, an aircraft station located on the earth is a terrestrial station.

The base station 20 is not limited to a terrestrial station. The base station 20 may be a non-terrestrial base station (non-terrestrial station) capable of floating in the air or space. For example, the base station 20 may be an aircraft station or a satellite station.

The satellite station is a satellite station capable of floating outside the atmosphere. The satellite station may be an apparatus mounted on a space mobile body such as an artificial satellite, or may be a space mobile body itself. A space mobile body is a mobile body that moves outside the atmosphere. Examples of the space mobile body include artificial bodies such as artificial satellites, spacecraft, space stations, or probes. The satellite serving as the satellite station may be any of a low earth orbiting (LEO) satellite, a medium earth orbiting (MEO) satellite, a geostationary earth orbiting (GEO) satellite, or a highly elliptical orbiting (HEO) satellite. The satellite station may be an apparatus mounted on a low earth orbiting satellite, a medium earth orbiting satellite, a geostationary earth orbiting satellite, or a highly elliptical orbiting satellite.

The aircraft station is a wireless communication apparatus capable of floating in the atmosphere, such as an aircraft. The aircraft station may be an apparatus mounted on an aircraft or the like, or may be an aircraft itself. The aircraft conceptually includes not only heavy aircraft such as an airplane or a glider but also light aircraft such as a balloon or an airship. The aircraft conceptually includes not only a heavy aircraft or a light aircraft but also a rotorcraft such as a helicopter or an auto-gyro. The aircraft station or an aircraft equipped with an aircraft station may be an unmanned aerial vehicle such as a drone.

The unmanned aerial vehicle conceptually includes an unmanned aircraft system (UAS) and a tethered UAS. The unmanned aircraft conceptually includes also a Lighter-than-Air (LTA) unmanned aircraft system (UAS) and a Heavier-than-Air (HTA) unmanned aircraft system (UAS). The unmanned aircraft conceptually includes also High Altitude unmanned aircraft system (UAS) platforms (HAPs).

The coverage of the base station 20 may be relatively large such as a macro cell or relatively small such as a pico cell. The coverage of the base station 20 may be extremely small such as a femto cell. The base station 20 may have a beamforming function. In this case, the base station 20 may form a cell or a service area for each beam.

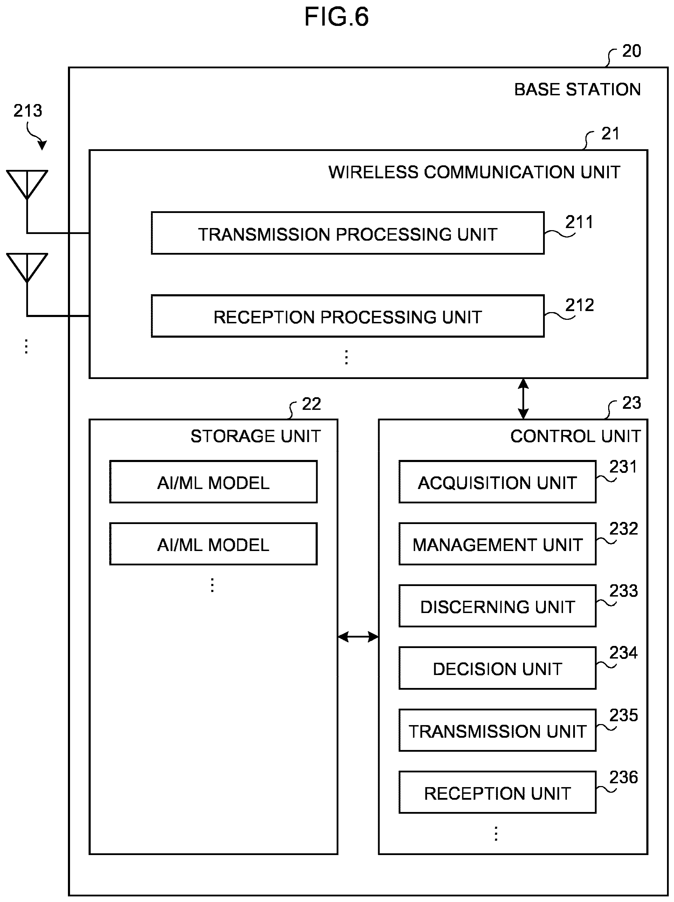

FIG. 6 is a diagram illustrating a configuration of the base station 20 according to the present embodiment. The base station 20 includes a wireless communication unit 21, a storage unit 22, and a control unit 23. The configuration illustrated in FIG. 6 is a functional configuration, and the hardware configuration may be different from this configuration. Furthermore, the functions of the base station 20 may be implemented in a distributed form in a plurality of physically separated configurations.

The wireless communication unit 21 is a signal processing unit for performing wireless communication with other wireless communication apparatuses (for example, the relay station 30, the terminal apparatus 40, or another base station 20). The wireless communication unit 21 is controlled by the control unit 23. The wireless communication unit 21 may support one or a plurality of radio access schemes. The wireless communication unit 21 may support at least one of NR, LTE, and 6G. The wireless communication unit 21 may support W-CDMA, cdma2000, and the like in addition to NR, LTE, and 6G. The wireless communication unit 21 may support an automatic retransmission technology such as Hybrid Automatic Repeat reQuest (HARQ).

The wireless communication unit 21 includes a transmission processing unit 211, a reception processing unit 212, and an antenna 213. The wireless communication unit 21 may include a plurality of the transmission processing units 211, a plurality of the reception processing units 212, and a plurality of the antennas 213. In a case where the wireless communication unit 21 supports a plurality of radio access schemes, individual portions of the wireless communication unit 21 may be configured separately for each of the radio access schemes. The transmission processing unit 211 and the reception processing unit 212 may be configured separately for LTE, NR, and 6G. The antenna 213 may include a plurality of antenna elements, for example, a plurality of patch antennas. The wireless communication unit 21 may have a beamforming function. For example, the wireless communication unit 21 may have a polarization beamforming function using vertically polarized waves (V-polarized waves) and horizontally polarized waves (H-polarized waves) (or may have a polarization beamforming function using dual polarization in polarization directions of 45 degrees and - 45 degrees with the vertical direction).

The transmission processing unit 211 performs transmission processing of downlink control information and downlink data. The transmission processing unit 211 codes the downlink control information and the downlink data input from the control unit 23 by using a coding method such as block coding, convolutional coding, or turbo coding. The coding may perform coding using a polar code or a Low Density Parity Check (LDPC) code. The transmission processing unit 211 modulates the coded bits by a predetermined modulation scheme such as BPSK, QPSK, 16 QAM, 64 QAM, or 256 QAM. In this case, the signal points on the constellation do not necessarily have to be equidistant. The constellation may be a non-uniform constellation (NUC). The transmission processing unit 211 multiplexes the modulation symbol of each of channels and the downlink reference signal and allocates the multiplexed signals on a predetermined resource element. Subsequently, the transmission processing unit 211 performs various types of signal processing on the multiplexed signal. For example, the transmission processing unit 211 performs processing such as conversion to the frequency domain using fast Fourier transform, addition of a guard interval (cyclic prefix), generation of a baseband digital signal, conversion to an analog signal, quadrature modulation, upconvert, removal of extra frequency components, and power amplification. The signal generated by the transmission processing unit 211 is transmitted from the antenna 213.

The reception processing unit 212 processes an uplink signal received via the antenna 213. For example, the reception processing unit 212 performs processing on the uplink signal, such as down-conversion, removal of unnecessary frequency components, amplification level control, orthogonal demodulation, conversion to digital signal, removal of guard interval (cyclic prefix), and frequency domain signal extraction using fast Fourier transform. The reception processing unit 212 then demultiplexes an uplink channel such as a physical uplink shared channel (PUSCH) or a physical uplink control channel (PUCCH) and an uplink reference signal from the signal that has undergone these processing procedures. Subsequently, the reception processing unit 212 demodulates a received signal using a modulation scheme such as binary phase shift keying (BPSK) or quadrature phase shift keying (QPSK) for the modulation symbol of the uplink channel. The modulation scheme used in the demodulation may be 16 quadrature amplitude modulation (QAM), 64 QAM, or 256 QAM. In this case, the signal points on the constellation do not necessarily have to be equidistant. The constellation may be a non-uniform constellation (NUC). Subsequently, the reception processing unit 212 performs decoding processing on the coded bits of the demodulated uplink channel. The decoded uplink data and uplink control information are output to the control unit 23.

The antenna 213 is an antenna apparatus that performs mutual conversion of a current and a radio wave. The antenna 213 may include one antenna element, for example, one patch antenna. Furthermore, the antenna 213 may include a plurality of antenna elements (for example, a plurality of patch antennas). In a case where the antenna 213 includes a plurality of antenna elements, the wireless communication unit 21 may have a beamforming function. The wireless communication unit 21 may control the directivity of a radio signal using a plurality of antenna elements to generate a directional beam. The antenna 213 may be a dual polarized antenna. In a case where the antenna 213 is a dual polarized antenna, the wireless communication unit 21 may use, in radio signal transmission, vertically polarized waves (V-polarized waves) and horizontally polarized waves (H-polarized waves) (or dual polarized waves in polarization direction at 45 degrees and -45 degrees with the vertical direction). The wireless communication unit 21 may control directivity of a radio signal transmitted using vertically polarized waves and horizontally polarized waves (or dual polarization in polarization direction at 45 degrees and -45 degrees with vertical direction). Furthermore, the wireless communication unit 21 may transmit and receive spatially multiplexed signals via a plurality of layers including a plurality of antenna elements.

The storage unit 22 is a readable/writable storage device such as DRAM, SRAM, flash memory, or a hard disk. The storage unit 22 functions as a storage means in the base station 20. The storage unit 22 may store an AI/ML model used in processing of each functionality. The AI/ML model stored in the base station 20 may be similar to or different from the AI/ML model stored in the relay station 30 or the terminal apparatus 40 described below.

The control unit 23 is a controller that controls individual parts of the base station 20. The control unit 23 controls the wireless communication unit to perform wireless communication with another wireless communication apparatus (for example, the relay station 30, the terminal apparatus 40, or another base station 20). The control unit 23 may be implemented by a processor such as a CPU or an MPU. Specifically, the control unit 23 may be implemented by a processor executing various programs stored in a storage device inside the base station 20 using the RAM or the like as a work area. The control unit 23 may be implemented by an integrated circuit such as an ASIC or an FPGA. The control unit 23 may be implemented by a GPU. The CPU, MPU, ASIC, FPGA, and GPU can all be regarded as controllers. The control unit 23 may include a plurality of physically separated objects. For example, the control unit 23 may include a plurality of semiconductor chips.

The control unit 23 includes an acquisition unit 231, a management unit 232, a discerning unit 233, a decision unit 234, a transmission unit 235, and a reception unit 236. Individual blocks (acquisition unit 231 to reception unit 236) constituting the control unit 23 are functional blocks individually indicating functions of the control unit 23. These functional blocks may be software blocks or hardware blocks. For example, each of the functional blocks described above may be one software module realized by software (including a microprogram) or one circuit block on a semiconductor chip (die). Needless to say, each of the functional blocks may be formed as one processor or one integrated circuit. Note that the control unit 23 may be configured in a functional unit different from the above-described functional block. The functional block may be configured by using any method.

In some embodiments, the base station 20 may be configured by a set of a plurality of physical or logical apparatuses. As an example, the base station 20 in the present embodiment may be classified into a plurality of apparatuses such as a Baseband Unit (BBU) and a Radio Unit (RU). The base station 20 may be construed as a set of the plurality of apparatuses. In addition, the base station may be either one or both of the BBU and the RU. The BBU and the RU may be connected to each other via a predetermined interface (for example, an enhanced Common Public Radio Interface (eCPRI)).

The RU may be referred to as a Remote Radio Unit (RRU) or a Radio DoT (RD). The RU may support a gNB Distributed Unit (gNB-DU) described below. The BBU may support a gNB Central Unit) (gNB-CU) described below. The RU may be an apparatus integrally formed with an antenna. An antenna of the base station 20, for example, an antenna integrally formed with an RU, may employ an Advanced Antenna System and support MIMO (for example, FD-MIMO) or beamforming. For example, the antenna of the base station 20 may include 64 transmitting antenna ports and 64 receiving antenna ports.

The antenna mounted on the RU may be an antenna panel including one or more antenna elements, and the RU may include one or more antenna panels. The RU may be equipped with two types of antenna panels: a horizontally polarized antenna panel and a vertically polarized antenna panel. The RU may be equipped with two types of antenna panels, that is, a right-handed circularly polarized antenna panel and a left-handed circularly polarized antenna panel, or an antenna panel with a polarization direction of 45 degrees with the vertical direction and an antenna panel with a polarization direction of -45 degrees with the vertical direction. A plurality of antennas having the plurality of polarization directions may be mounted on one antenna panel. The RU may form and control an independent beam for each antenna panel.

The plurality of base stations 20 may be connected to each other. One or the plurality of base stations 20 may be included in a Radio Access Network (RAN). That is, the base station 20 may be simply referred to as a RAN, a RAN node, an Access Network (AN), an AN node, or the like. RAN in LTE is sometimes referred to as Enhanced Universal Terrestrial RAN (EUTRAN). RAN in NR may be referred to as NGRAN. In addition, RAN in 6G may be referred to as 6GRAN. RAN in W-CDMA (UMTS) may be referred to as UTRAN.

The base station 20 in LTE may be referred to as Evolved Node B (eNodeB) or eNB. That is, EUTRAN includes one or a plurality of eNodeB (eNB). NR base stations 20 may be referred to as gNodeB or gNB. At this time, NGRAN contains one or a plurality of gNBs. A 6G base station may be referred to as a 6GNodeB, a 6gNodeB, a 6GNB, or a 6gNB. At this time, 6GRAN contains one or a plurality of 6GNBs. EUTRAN may include gNB (en-gNB) connected to the core network (EPC) in LTE communication systems (EPS). NGRAN may include an ng-eNB connected to the core network 5GC in a 5G communication system (5GS).

When the base station 20 is eNB, gNB, 6GNB or the like, the base station 20 may be referred to as 3GPP access. When the base station 20 is a radio access point, the base station 20 may be referred to as non-3GPP access. The base station 20 may be an optical link apparatus referred to as a Remote Radio Head (RRH). Furthermore, in a case where the base station 20 is a gNB, the base station 20 may be a combination of the gNB-CU and the gNB-DU described above, or may be any of the gNB-CU and the gNB-DU.

Here, in order to have a communication with the UE, the gNB-CU hosts a plurality of upper layers (for example, Radio Resource Control (RRC), Service Data Adaptation Protocol (SDAP), and Packet Data Convergence Protocol (PDCP)) in an access stratum. On the other hand, the gNB-DU hosts a plurality of lower layers (for example, Radio Link Control (RLC), Medium Access Control (MAC), and Physical Layer (PHY)) in an access stratum. That is, among messages/information to be described below, RRC signaling (semi-static notification) may be generated by the gNB-CU, while MAC CE and DCI (dynamic notification) may be generated by the gNB-DU. Alternatively, among the RRC configurations (semi-static notifications), some configurations such as IE: cellGroupConfig may be generated by the gNB-DU, while the remaining configurations may be generated by the gNB-CU, for example. These configurations may be transmitted and received through an F1 interface described below.

The base station 20 may be configured to be able to communicate with another base station. When the plurality of base stations 20 are eNBs or a combination of an eNB and an en-gNB, these base stations 20 may be connected by an X2 interface. When the plurality of base stations 20 are gNBs or a combination of a gn-eNB and a gNB, these base stations 20 may be connected by an Xn interface. When the plurality of base stations 20 are a combination of a gNB-CU and a gNB-DU, these base stations 20 may be interconnected by the F1 interface described above. A message/information (for example, RRC signaling, MAC Control Element (MAC CE), Downlink Control Information (DCI), or the like) to be described below may be transmitted among the plurality of base stations 20 via an interface such as an X2 interface, an Xn interface, an F1 interface, for example.

The cell provided by the base station 20 may be referred to as a serving cell. The serving cell conceptually includes a primary cell (PCell) and a secondary cell (SCell). When dual connectivity is provided to the terminal apparatus 40, the PCell provided by a Master Node (MN) and zero or one or more SCells may be referred to as a Master Cell Group. Examples of dual connectivity include EUTRA-EUTRA Dual Connectivity, EUTRA-NR Dual Connectivity (ENDC), EUTRA-NR Dual Connectivity with 5GC, NR-EUTRA Dual Connectivity (NEDC), and NR-NR Dual Connectivity, etc. Examples of the dual connectivity further include NR-6G Dual Connectivity and 6G-NR Dual Connectivity.

The serving cell may include a Primary Secondary Cell or Primary SCG Cell (PSCell). In a case where dual connectivity is provided to the terminal apparatus 40, the PSCell and the zero or one or more SCells provided by a secondary node (SN) may be referred to as Secondary Cell Group (SCG). Unless specially configured (for example, PUCCH on SCell), a physical uplink control channel (PUCCH) is transmitted by the PCell and the PSCell, but is not transmitted by the SCell. The radio link failure is also detected by the PCell and the PSCell, but is not detected by the SCell (need not be detected). In this manner, since the PCell and the PSCell have a special role in the serving cell, these cells are also referred to as Special Cells (SpCells).

One cell may be associated with one downlink component carrier and one uplink component carrier. The system bandwidth corresponding to one cell may be divided into a plurality of bandwidth parts (BWPs). In this case, one or a plurality of BWPs may be configured for the terminal apparatus 40, and one BWP may be used for the terminal apparatus 40 as an active BWP. Radio resources (for example, a frequency band, a numerology (subcarrier spacing), and a slot format (slot configuration)) usable by the terminal apparatus 40 may be different for each cell, each component carrier, or each BWP.

### <2-3. Configuration of relay station>

The relay station 30 is a wireless communication apparatus serving as a repeater of the base station 20. The relay station 30 is a type of base station. The relay station 30 is a type of information processing apparatus. The relay station 30 can also be referred to as a relay base station. For example, the relay station 30 may be an apparatus referred to as a repeater (for example, RF Repeater, Smart Repeater, or Intelligent Surface). The relay station 30 is a wireless communication apparatus that performs wireless communication with other wireless communication apparatuses (for example, the base station 20, another relay station 30, or the terminal apparatus 40).

The relay station 30 may be capable of performing NOMA communication with the terminal apparatus 40. The relay station 30 relays communication between the base station 20 and the terminal apparatus 40. The relay station 30 may be capable of performing wireless communication with another relay station 30 and the base station 20. The relay station 30 may be a terrestrial station apparatus or a non-terrestrial station apparatus. The relay station 30 constitutes a radio access network RAN together with the base station 20.

The relay station 30 may be a fixed apparatus, a movable apparatus, or a floating apparatus. The size of the coverage of the relay station 30 is not limited to a specific size. The cell covered by the relay station 30 may be a macro cell, a micro cell, or a small cell.

The relay station 30 may be mounted on any type of apparatus as long as the function of relay is satisfied. The relay station 30 may be mounted on a terminal apparatus such as a smartphone, may be mounted on an automobile, a train or a human-powered vehicle, may be mounted on a balloon, an airplane, or a drone, or on a home appliance such as a television, a game machine, an air conditioner, a refrigerator, or a lighting fixture, etc.

The configuration of the relay station 30 may be similar to the configuration of the base station 20 described above. Similarly to the base station 20 described above, the relay station 30 may be an apparatus installed on a mobile body, or may be a mobile body itself. Here, the mobile body may be a mobile terminal such as a smartphone or a mobile phone, as described above. The mobile body may be a mobile body that moves on land (on the ground in a narrow sense) or may be a mobile body that moves in the ground. The mobile body may be a mobile body that moves over water or may be a mobile body that moves under water. The mobile body may be a mobile body that moves inside the atmosphere or may be a mobile body that moves outside the atmosphere. The relay station 30 may be a terrestrial station apparatus or a non-terrestrial station apparatus. The relay station 30 may be an aircraft station or a satellite station.

The coverage of the relay station 30 may be large such as a macro cell or small such as a pico cell, similarly to the base station 20. The coverage of the relay station 30 may be extremely small such as a femto cell. The relay station 30 may have a beamforming function. The relay station 30 may form a cell or a service area for each beam.

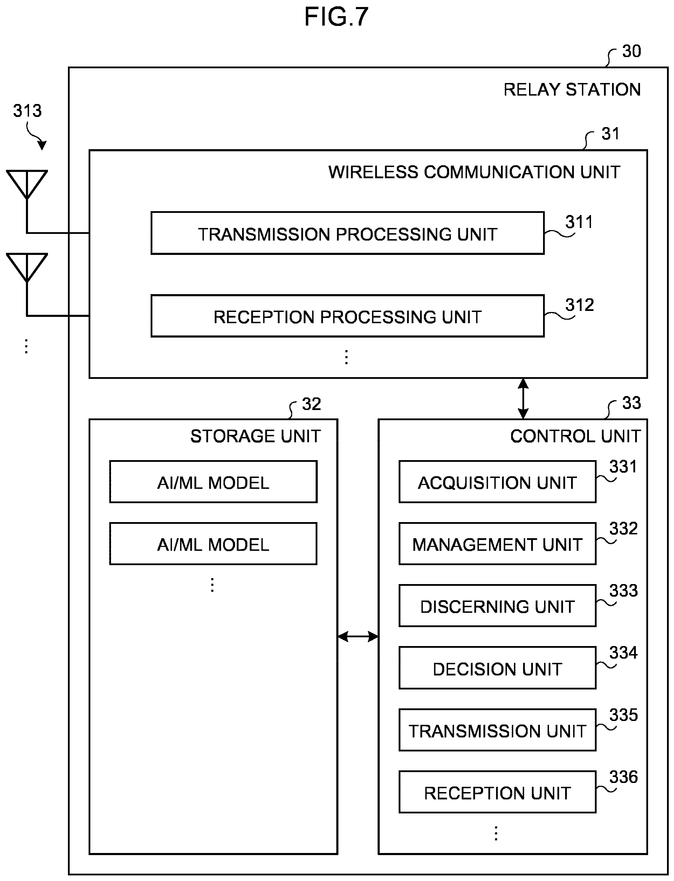

FIG. 7 is a diagram illustrating a configuration of the relay station 30 according to the present embodiment. The relay station 30 includes a wireless communication unit 31, a storage unit 32, and a control unit 33. The configuration illustrated in FIG. 7 is a functional configuration, and the hardware configuration may be different from this configuration. Furthermore, the functions of the relay station 30 may be implemented in a distributed manner in a plurality of physically separated configurations.

The wireless communication unit 31 is a signal processing unit for performing wireless communication with other wireless communication apparatuses (for example, the base station 20, the terminal apparatus 40, or another relay station 30). The wireless communication unit 31 may support one or a plurality of radio access schemes. The wireless communication unit 31 may support at least one of NR, LTE, and 6G. The wireless communication unit 31 may support W-CDMA, cdma3000, and the like in addition to NR, LTE, and 6G.

The wireless communication unit 31 includes a transmission processing unit 311, a reception processing unit 312, and an antenna 313. The wireless communication unit 31 may include a plurality of the transmission processing units 311, a plurality of the reception processing units 312, and a plurality of the antennas 313. In a case where the wireless communication unit 31 supports a plurality of radio access schemes, individual portions of the wireless communication unit 31 may be configured separately for each of the radio access schemes. The transmission processing unit 311 and the reception processing unit 312 may be configured separately for LTE, NR, and 6G. The configurations of the transmission processing unit 311, the reception processing unit 312, and the antenna 313 may be similar to the configurations of the transmission processing unit 211, the reception processing unit 212, and the antenna 213 of the above-described base station 20, respectively. The wireless communication unit 31 may have a beamforming function similarly to the wireless communication unit 21 of the base station 20.

The storage unit 32 is a readable/writable storage device such as DRAM, SRAM, flash memory, or a hard disk. The storage unit 32 functions as a storage means in the relay station 30. The configuration and function of the storage unit 32 may be similar to the configuration and function of the storage unit 22 of the base station 20 described above. The storage unit 32 may store an AI/ML model used in processing of each functionality. The AI/ML model stored in the relay station 30 may be similar to or different from the AI/ML model stored in the base station 20 described above or the terminal apparatus 40 described below.

The control unit 33 is a controller that controls individual parts of the relay station 30. The control unit 33 may be implemented by a processor such as a CPU or an MPU. For example, the control unit 33 is implemented by the processor executing various programs stored in the storage device inside the relay station 30 using RAM or the like as a work area. The control unit 33 may be implemented by an integrated circuit such as an ASIC or an FPGA. The CPU, MPU, ASIC, and FPGA can all be regarded as controllers. The control unit 33 may be implemented by a GPU. The CPU, MPU, ASIC, FPGA, and GPU can all be regarded as controllers. The control unit 33 may include a plurality of physically separated objects. For example, the control unit 33 may include a plurality of semiconductor chips. The configuration and function of the control unit 33 may be similar to the configuration and function of the control unit 23 of the base station 20 described above.

The control unit 33 includes an acquisition unit 331, a management unit 332, a discerning unit 333, a decision unit 334, a transmission unit 335, and a reception unit 336. Individual blocks (acquisition unit 331 to reception unit 336) constituting the control unit 33 are functional blocks individually indicating functions of the control unit 33. These functional blocks may be software blocks or hardware blocks. For example, each of the functional blocks described above may be one software module realized by software (including a microprogram) or one circuit block on a semiconductor chip (die). Needless to say, each of the functional blocks may be formed as one processor or one integrated circuit. Note that the control unit 33 may be configured in a functional unit different from the above-described functional block. The functional block may be configured by using any method.

Note that the relay station 30 may be an IAB relay node. The relay station 30 operates as IAB-mobile termination (IAB-MT) for an IAB donor node that provides backhaul, and operates as an IAB-distributed unit (IAB-DU) for the terminal apparatus 40 that provides access. The IAB donor node may be the base station 20, for example, and operates as an IAB-Central Unit (IAB-CU).

### <2-4. Configuration of terminal apparatus>

The terminal apparatus 40 is a wireless communication apparatus that performs wireless communication with another wireless communication apparatus (for example, the base station 20, the relay station 30, or another terminal apparatus 40, etc). The terminal apparatus 40 can be implemented by employing any form of information processing apparatus (computer). For example, the terminal apparatus 40 may be a mobile terminal such as a mobile phone, a smart device (smartphone or tablet), a personal digital assistant (PDA), or a laptop PC. The terminal apparatus 40 may be an imaging apparatus (for example, a camcorder) having a communication function. The terminal apparatus 40 may be a motorcycle, a moving relay vehicle, or the like, equipped with a communication device such as the field pickup unit (FPU). The terminal apparatus 40 may be a Machine to Machine (M2M) device or an Internet of Things (IoT) device. The terminal apparatus 40 may be a wearable device such as a smart watch.

The terminal apparatus 40 may be an xR device such as an augmented reality (AR) device, a virtual reality (VR) device, or a mixed reality (MR) device. At this time, the xR device may be an eyeglass-type device such as AR glasses or MR glasses, or may be a head-mounted device such as a VR head-mounted display. In a case where the terminal apparatus 40 is an xR device, the terminal apparatus 40 may be a standalone device including only a portion worn on the user (for example, the eyeglass portion). Furthermore, the terminal apparatus 40 may be a terminal-linked device including the portion worn on the user (for example, the eyeglass portion) and a terminal portion (for example, a smart device) linked with the portion worn on the user.

The terminal apparatus 40 may be capable of performing NOMA communication with the base station 20. The terminal apparatus 40 may be able to use an automatic retransmission technology such as HARQ when communicating with the base station 20. The terminal apparatus 40 may be capable of sidelink communication with another terminal apparatus 40. The terminal apparatus 40 may be capable of using an automatic retransmission technology such as HARQ when performing sidelink communication. The terminal apparatus 40 may be able to perform NOMA communication when performing sidelink communication with another terminal apparatus 40. The terminal apparatus 40 may be able to perform LPWA communication with another wireless communication apparatus such as the base station 20. The wireless communication used by the terminal apparatus 40 may be wireless communication using millimeter waves. The wireless communication (including sidelink communication) used by the terminal apparatus 40 may be wireless communication using radio waves or wireless communication using infrared rays or visible light, namely, optical wireless communication.

The terminal apparatus 40 may be a movable wireless communication apparatus, that is, a mobile apparatus. Furthermore, the terminal apparatus 40 may be a wireless communication apparatus installed on a mobile body, or may be the mobile body itself. The terminal apparatus 40 may be a vehicle that moves on a road, such as an automobile, a bus, a truck, or a motorbike, or may be a wireless communication apparatus mounted on the vehicle. The mobile body may be a mobile terminal, or may be a mobile body that moves on land (on the ground in a narrow sense), in the ground, on water, or under water. The mobile body may be a mobile body that moves inside the atmosphere, such as an aircraft, airship, balloon, or a helicopter, or may be a mobile body that moves outside the atmosphere, such as an artificial satellite. The mobile body may be an unmanned aerial vehicle (UAV) such as a drone. The terminal apparatus 40 may be a wireless communication apparatus mounted on a mobile body.

The terminal apparatus 40 may be capable of performing communication while being simultaneously connected to a plurality of base stations 20 or a plurality of cells. For example, when one base station 20 supports a communication area via a plurality of cells (for example, pCell and sCell), it is possible to bundle the plurality of cells and communicate between the base station 20 and the terminal apparatus 40 by using a carrier aggregation (CA) technology, a dual connectivity (DC) technology, or a multi-connectivity (MC) technology. Alternatively, the terminal apparatus 40 and the plurality of base stations 20 can communicate with each other by a Coordinated MultiPoint Transmission and Reception (CoMP) technology via cells of different base stations 20.

The terminal apparatus 40 may be a relay terminal that relays communication to a remote terminal.

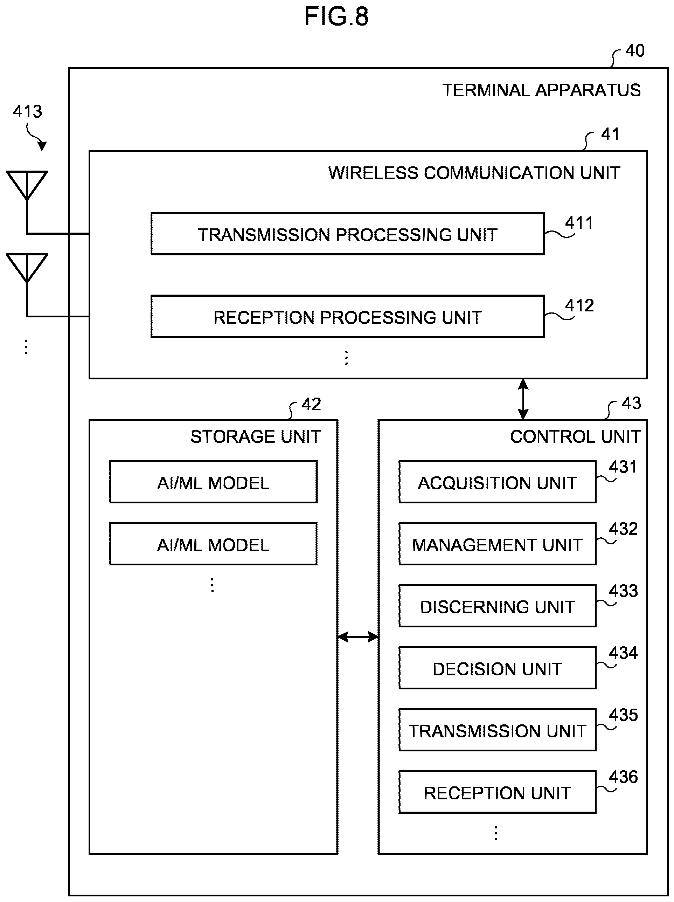

FIG. 8 is a diagram illustrating a configuration of the terminal apparatus 40 according to the present embodiment. The terminal apparatus 40 includes a wireless communication unit 41, a storage unit 42, and a control unit 33. The configuration illustrated in FIG. 8 is a functional configuration, and the hardware configuration may be different from this configuration. Furthermore, the functions of the terminal apparatus 40 may be implemented in a distributed manner in a plurality of physically separated configurations.

The wireless communication unit 41 is a signal processing unit for performing wireless communication with other wireless communication apparatuses (for example, the base station 20, the relay station 30, and another terminal apparatus 40). The wireless communication unit 41 is controlled by the control unit 43. The wireless communication unit 41 may support one or a plurality of radio access schemes. The wireless communication unit 41 may support at least one of NR, LTE, and 6G. The wireless communication unit 41 may support W-CDMA, cdma2000, and the like in addition to NR, LTE, and 6G. The wireless communication unit 41 may support an automatic retransmission technology such as Hybrid Automatic Repeat reQuest (HARQ).

The wireless communication unit 41 includes a transmission processing unit 411, a reception processing unit 412, and an antenna 413. The wireless communication unit 41 may include a plurality of the transmission processing units 411, a plurality of the reception processing units 412, and a plurality of the antennas 413. In a case where the wireless communication unit 41 supports a plurality of radio access schemes, individual portions of the wireless communication unit 41 may be configured separately for each of the radio access schemes. The transmission processing unit 411 and the reception processing unit 412 may be configured separately for LTE, NR, and 6G. The antenna 413 may include a plurality of antenna elements, for example, a plurality of patch antennas. The wireless communication unit 41 may have a beamforming function. For example, the wireless communication unit 41 may have a polarization beamforming function using vertically polarized waves (V-polarized waves) and horizontally polarized waves (H-polarized waves) (or may have a polarization beamforming function using dual polarization in polarization directions of 45 degrees and - 45 degrees with the vertical direction).

The storage unit 42 is a readable/writable storage device such as DRAM, SRAM, flash memory, or a hard disk. The storage unit 42 functions as a storage means in the terminal apparatus 40. The storage unit 42 may store an AI/ML model used in processing of each functionality. The AI/ML model stored in the terminal apparatus 40 may be similar to or different from the AI/ML model stored in the base station 20 or the relay station 30 described above.

The control unit 43 is a controller that controls individual parts of the terminal apparatus 40. The control unit 43 controls the wireless communication unit to perform wireless communication with another wireless communication apparatus (for example, the base station 20, the relay station 30, or another terminal apparatus 40). The control unit 43 may be implemented by a processor such as a CPU or an MPU. For example, the control unit 23 is implemented by the processor executing various programs stored in the storage device inside the terminal apparatus 40 using RAM or the like as a work area. The control unit 43 may be implemented by an integrated circuit such as an ASIC or an FPGA. The CPU, MPU, ASIC, and FPGA can all be regarded as controllers. The control unit 43 may be implemented by a GPU. The CPU, MPU, ASIC, FPGA, and GPU can all be regarded as controllers. The control unit 43 may include a plurality of physically separated objects. For example, the control unit 43 may include a plurality of semiconductor chips.

The control unit 43 includes an acquisition unit 431, a management unit 432, a discerning unit 433, a decision unit 434, a transmission unit 435, and a reception unit 436. Individual blocks (acquisition unit 431 to reception unit 436) constituting the control unit 43 are functional blocks individually indicating functions of the control unit 43. These functional blocks may be software blocks or hardware blocks. For example, each of the functional blocks described above may be one software module realized by software (including a microprogram) or one circuit block on a semiconductor chip (die). Needless to say, each of the functional blocks may be formed as one processor or one integrated circuit. Note that the control unit 43 may be configured in a functional unit different from the above-described functional block. The functional block may be configured by using any method.

### <2-5. AI/ML model>

As described above, the storage unit 22 of the base station 20, the storage unit 32 of the relay station 30, and the storage unit 42 of the terminal apparatus 40 each store an AI/ML model. Furthermore, as described above, the base station 20, the relay station 30, and the terminal apparatus 40 each generate various types of information using the AI/ML model. In the following description, the AI/ML model may be referred to as a learning model, or simply a model.

The learning model is a neural network model, for example. The neural network model includes an input layer, an intermediate layer (or a hidden layer), and an output layer, each including a plurality of nodes, the nodes being connected to each other via edges. Each layer has a function referred to as an activation function, and each edge is weighted. The learning model has one or a plurality of intermediate layers (or a hidden layer). In a case where the learning model is implemented as a neural network model, learning of the learning model includes, for example, setting the number of intermediate layers (or hidden layers), the number of nodes in each layer, the weight of each edge, or the like.

Here, the neural network model may be a model trained by deep learning. In this case, the neural network model may be a model in a form of a Deep Neural Network (DNN). The neural network model may be a model in a form referred to as a convolution neural network (CNN), a recurrent neural network (RNN), or long short-term memory (LSTM), for example. Needless to say, the neural network model is not limited to these forms of models.

In CNN, a hidden layer includes individual layers each referred to as a convolution layer and a pooling layer. The convolution layer applies filtering by a convolution operation to extract data referred to as a feature map. The pooling layer compresses information of the feature map output from the convolution layer to implement down-sampling. CNN is used, for example, for image recognition, information regarding each picture element, also referred to as a pixel of an image, is input to an input layer, making it possible to obtain information related to the image recognized as an output layer.

The RNN has a network structure in which a value of the hidden layer is recursively input to the hidden layer, and processes short-period time-series data, for example.

In the LSTM, the influence of the far past output can be held by introducing a parameter referred to as a memory cell that holds the state of the intermediate layer into the intermediate layer output of the RNN. That is, the LSTM processes time-series data of a longer period than the RNN.

Needless to say, the learning model is not limited to a neural network model. For example, the learning model may be a model based on reinforcement learning. In reinforcement learning, the model is trained through trial and error to take an action (setting) that maximizes value. In addition, the learning model may be a logistic regression model.

Note that the learning model may include a plurality of models. For example, the learning model may include a plurality of neural network models. More specifically, the learning model may include a plurality of neural network models selected from CNN, RNN, and LSTM, for example. In a case where the learning model includes a plurality of neural network models, the plurality of neural network models may be in a dependent relationship or a parallel relationship.

Note that the learning model can be rephrased as an artificial intelligence (AI) model, a machine learning (ML) model, or a trained model. In the following description, the learning model may be simply referred to as a model. Hereinafter, the learning model will be described using the learning model M illustrated in FIG. 1 as an example.

The learning model M is a learning model including a first model and a second model. The first model and the second model are each a submodel of the learning model M. The first model is the first half of the learning model M and is stored in the transmission apparatus. The second model is the first half of the learning model M and is stored in the transmission apparatus. Note that a submodel can also be regarded as a type of learning model. Hereinafter, the learning model of the present embodiment will be described in detail.

The learning model M is, for example, a learning model (trained model) that has performed learning with the assistance information T as input data and assistance information R as a ground truth label (teaching data). As described above, the assistance information is information necessary for the reception apparatus to perform processing related to wireless communication or information for assisting processing related to wireless communication, performed by the reception apparatus. For example, the assistance information is information (for example, control information) necessary for operations, such as uplink data transmission, sidelink transmission, unlicensed communication, and handover of the terminal apparatus 40. The assistance information R is information related to the assistance information T. The assistance information R may be information partially different from the assistance information T or may be information indicating the same information as the assistance information T.

When the base station 20 or the terminal apparatus 40 inputs first information (for example, the assistance information T) to the first model of the learning model M, the first model outputs second information (for example, compressed information/feature information of the assistance information T). In addition, when the base station 20 or the terminal apparatus 40 inputs the second information to the second model of the learning model M, the second model outputs third information (for example, the assistance information R).

In this case, the learning model M may be a learning model that includes: an input layer that inputs the first information (for example, the assistance information T); an output layer that outputs the third information (for example, the assistance information R); a first element that belongs to any layer from the input layer to the output layer other than the output layer; and a second element having a value calculated based on the first element and the weight of the first element. The learning model M may be a learning model to cause a computer to function to output the third information from the output layer in accordance with the first information input to the input layer by performing an operation based on the first element and the weight of the first element (that is, a connection coefficient) using each element belonging to each layer other than the output layer as the first element onto the information input to the input layer.

Here, it is assumed that the learning model M is implemented by a neural network having one or a plurality of intermediate layers such as a DNN. In this case, for example, the first element included in the learning model corresponds to any node of the input layer or the intermediate layer. In addition, the second element corresponds to a node at a next stage which is a node to which a value is transmitted from a node corresponding to the first element. In addition, the weight of the first element corresponds to a connection coefficient being a weight considered for a value transmitted from the node corresponding to the first element to the node corresponding to the second element.

In addition, the machine learning model M is assumed to be implemented by a regression model expressed by "y=a1*x1+a2*x2+···+ai*xi". In this case, for example, the first element included in the learning model M corresponds to input data (xi) such as x1, x2, etc. Furthermore, the weight of the first element corresponds to a coefficient ai corresponding to xi. Here, the regression model can be regarded as a simple perceptron having an input layer and an output layer. When each model is regarded as a simple perceptron, the first element can be regarded as any node included in the input layer, and the second element can be regarded as a node included in the output layer.

The base station 20 or the terminal apparatus 40 calculates information to be output using a model having any type of structure such as a neural network and a regression model. Specifically, the learning model M has a coefficient that is set so as to output the third information (for example, assistance information R) in response to the input of the first information (for example, the assistance information T). For example, the base station 20 or the terminal apparatus 40 sets the coefficient based on similarity between the third information and a value obtained by inputting the first information to the learning model. The base station 20 or the terminal apparatus 40 generates the second information from the first information using such a submodel (first model) of the learning model M. Alternatively, the base station 20 or the terminal apparatus 40 generates the third information from the second information by using such a submodel (second model) of the learning model M.

The above example has described the model that outputs the third information in a case where the first information is input, as an example of the learning model M. However, the learning model M according to the embodiment may be a model generated based on a result obtained by repeating input and output of data to and from the learning model.

Furthermore, in a case where the base station 20 or the terminal apparatus 40 performs learning or generation of output information using a Generative Adversarial Network (GAN), the learning model may be a model constituting a part of the GAN.

Note that a training apparatus that trains the learning model M may be the base station 20, the relay station 30, or the terminal apparatus 40. The training apparatus may be another information processing apparatus (for example, the management apparatus 10 or a server apparatus connected to the management apparatus 10 via a network). For example, it is assumed that the server apparatus trains the learning model M. In this case, the server apparatus trains the learning model M and stores the trained learning model M in the storage unit. More specifically, the server apparatus sets the connection coefficient of the learning model M such that the learning model outputs the third information (for example, assistance information R) when the first information (for example, the assistance information T) is input to the learning model M.

For example, the information processing apparatus (for example, the management apparatus 10, the base station 20, the relay station 30, the terminal apparatus 40, or the server apparatus) inputs the first information to the node of the input layer included in the learning model M, allows the data to propagate to the output layer of the learning model M through each intermediate layer so as to cause the learning model M to output the third information. Subsequently, the information processing apparatus corrects the connection coefficient of the learning model M based on a difference between the value actually output by the learning model M and the value defined as the ground truth label (teaching data). At this time, the information processing apparatus may correct the connection coefficient using a method such as back propagation. At this time, the server apparatus may correct the connection coefficient based on a cosine similarity between a vector indicating the input value and a vector indicating the value actually output by the learning model.

The learning may use any learning algorithm. For example, the information processing apparatus may train the learning model by using a learning algorithm such as a neural network, a support vector machine, clustering, reinforcement learning, random forest, or a decision tree.

Although the method of generating the learning model M has been described above, the above implementation examples are also applicable to learning models other than the learning model M.

Furthermore, the learning algorithm used in the present embodiment may be used for the training performed by a single information processing apparatus (for example, the management apparatus 10, the base station 20, the relay station 30, the terminal apparatus 40, or the server apparatus) alone, or may be used for the collaborative training performed by a plurality of information processing apparatuses (for example, a plurality of apparatuses selected from the management apparatus 10, the base station 20, the relay station 30, the terminal apparatus 40, and the server apparatus). Here, an example of a learning algorithm used for the collaborative training performed by the plurality of information processing apparatuses is federated learning.

### <<3. Network architecture>>

The configuration of the communication system 1 has been described above. Next, a network architecture applicable to the communication system 1 of the present embodiment will be described. Here, an architecture of a fifth generation mobile communication system (5G) will be described as an example of a core network CN of the communication system 1.

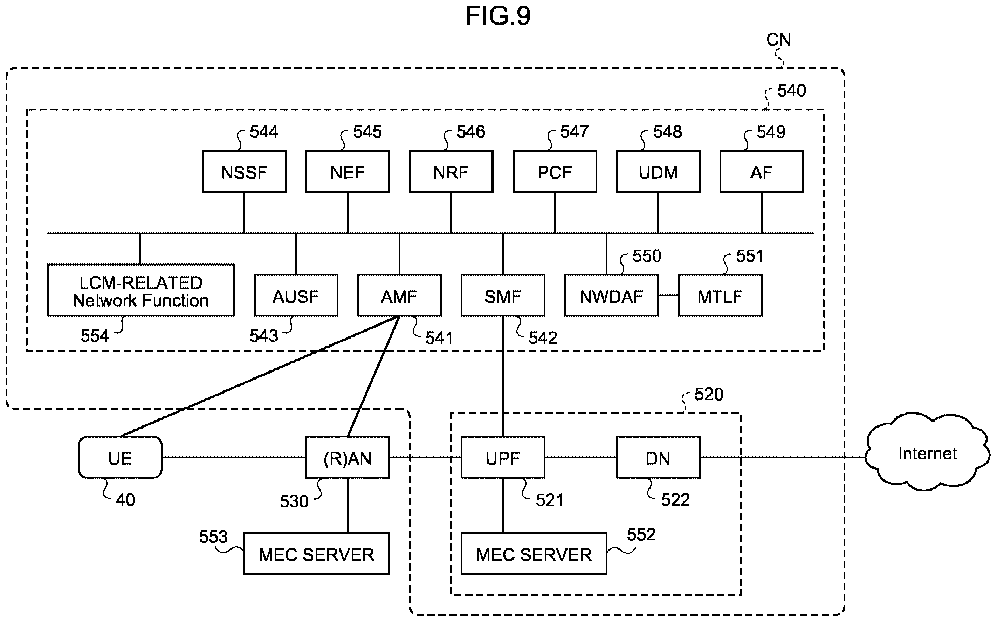

FIG. 9 is a diagram illustrating an example of a 5G architecture. The core network CN of 5G is also referred to as 5G Core (5GC)/Next Generation Core (NGC). Hereinafter, the core network CN of 5G is also referred to as a 5GC/NGC. The core network CN is connected to User Equipment (UE) 40 via a (R)AN 530.

Note that the terminal apparatus 40 illustrated in FIG. 8 is an example of the UE 40. The base station 20 illustrated in FIG. 6 or the relay station 30 illustrated in FIG. 7 is an example of the RAN/AN 530. Furthermore, the management apparatus 10 illustrated in FIG. 5 is an example of an apparatus having a function of the AF 549 or the AMF 541, for example.

The (R)AN 530 has a function of enabling the connection to a radio access network (RAN) and the connection to an Access Network (AN) other than RAN. The (R)AN 530 includes a base station referred to as a gNB or an ng-eNB.

The core network CN mainly performs connection permission and session management when the UE 40 is connected to the network. The core network CN may include a user plane function group 520 and a control plane function group 540.

The user plane function group 520 includes a user plane function (UPF) 521 and a data network (DN) 522. The UPF 521 has a function of user plane processing. The UPF 521 includes a routing/transfer function of data handled in the user plane. The DN 522, including Mobile Network Operator (MNO), has a function of providing a connection to an operator's own service, a function of providing an Internet connection, or a function of providing a connection to a third party service. In this manner, the user plane function group 520 plays a role of a gateway to be a boundary between the core network CN and the Internet.

The control plane function group 540 includes an access management function (AMF) 541, a session management function (SMF) 542, an authentication server function (AUSF) 543, a network slice selection function (NSSF) 544, a network exposure function (NEF) 545, a network repository function (NRF) 546, a policy control function (PCF) 547, a unified data management (UDM) 548, and an application function (AF) 549.

The AMF 541 has functions such as registration processing, connection management, and mobility management regarding the UE 40. The SMF 542 has functions such as session management and IP allocation and management of the UE 40. The AUSF 543 has an authentication function. The NSSF 544 has a function related to selection of a network slice. The NEF 545 has a function of providing a capability and an event of a network function to a third party, the AF 549, or an edge computing function.

The NRF 546 has a function of discovering network functions and holding network function profiles. The PCF 547 has a function of policy control. The UDM 548 has functions of generating 3GPP AKA authentication information and user ID processing. The AF 549 has a function of providing a service in interaction with the core network.

For example, the control plane function group 540 acquires information from the UDM 548 storing subscriber information of the UE 40, and determines whether the UE 40 is permitted to connect to the network. In this determination, the control plane function group 540 uses the contract information of the UE 40 and an encryption key included in the information acquired from the UDM 548. In addition, the control plane function group 540 performs processing such as generation of the encryption key.

That is, the control plane function group 540 determines whether to permit network connection according to whether the UDM 548 stores information of the UE 40 associated with a subscriber number referred to as International Mobile Subscriber Identity (IMSI), for example. Note that the IMSI is stored in a Subscriber Identity Module (SIM) card in the UE 40, for example.

The core network CN may have an LCM-related network function. The LCM-related network function is a network function that provides a function of LCM-related control. For example, the LCM-related network function has a function of controlling: data collection, model training, model identification, model delivery, model transfer, model download, model upload, model inference, model validation, model testing, model activation, model deactivation, model switching, model fallback, model monitoring, model update, model registration, model deployment, model configuration, or model selection, and a function of providing information necessary for the above functions.

The LCM-related network function may be included in existing network functions. For example, the LCM-related network function may be included in a Model Training Logical Function (MTLF) 551. The management apparatus 10 illustrated in FIG. 5 is an example of an apparatus having the function of the MTLF 551.

The LCM-related network function may be included in a server constituting the core network CN. For example, the LCM-related network function may be included in a server (for example, a Mobile Edge Computing (MEC) server 552) connected to the UPF 521. The LCM-related network function may be included in a server (for example, the MEC server 553) connected to the base station 20 ((R)AN 530). The management apparatus 10 illustrated in FIG. 5 is an example of the MEC server 552 or the MEC server 553.

The LCM-related network function may be included in the core network CN as a new network function. For example, the LCM-related network function 554 may be included in the core network CN as one of the control plane function group 540. The management apparatus 10 illustrated in FIG. 5 is an example of an apparatus having the function of the LCM-related network function 554.

The LCM-related network function may exist in the core network CN as one function or a plurality of functions.

### <<4. Operation of communication system>>

The network architecture has been described as above. Next, the operation of the communication system 1 having such a configuration will be described.

### <4-1. LCM>

First, live-cycle-management (LCM) will be described. As described above, LCM represents management of the AI/ML model. In the following description, the AI/ML model may be referred to as a learning model, or simply a model.

LCM may be configured by, for example, one or a plurality of processes/methods/procedures selected from the following (M1) to (M20). Note that the following (M1) to (M20) are merely examples. LCM may include those other than the following implementation examples ((M1) to (M20)). Hereinafter, (M1) to (M20) will be individually described.

### (M1) Data collection

Data collection is a process in which a network node, a management entity, or user equipment (UE) collects data for the purpose of training, data analysis, and inference of the AI/ML model.

### (M2) Model training

The model training is a process of performing data-driven training by learning the input/output relationship of the AI/ML model and acquiring the trained AI/ML model for inference.

### (M3) Model identification

Model identification is a process/method of identifying AI/ML models for common understanding of the network and the UE.

### (M4) Model delivery

Model delivery is a generic term that refers to delivery of the AI/ML model from one entity to another entity in an optionally selected method.

### (M5) Model transfer

The model transfer is a process of transferring, via an air interface, an AI/ML model of either a parameter of a model structure known at a receiving side or a new model with a parameter. The transfer may include a transfer of a full model or a partial model.

### (M6) Model download

The model download is a process of transferring a model from a network to a UE.

### (M7) Model upload

Model upload is a process of transferring a model from a UE to a network.

### (M8) Model inference

Model inference is a process of generating a series of outputs based on a series of inputs by using a trained AI/ML model.

### (M9) Model validation

Model validation is a sub-process of training that uses a data set different from the data set used for model training to evaluate the quality of the AI/ML model.

### (M10) Model testing

Model testing is a sub-process of training that uses a data set different from the data set used for model training or validation to evaluate the performance of the final AI/ML model. Unlike AI/ML model validation, the model testing has no assumption of subsequent model adjustment.

### (M11) Model activation

Model activation is a process of activating an AI/ML model of a specific function.

### (M12) Model deactivation

Model deactivation is a process of deactivating an AI/ML model of a specific function.

### (M13) Model switching

Model switching is a process of deactivating a currently active AI/ML model and activating another AI/ML model for a specific function.

### (M14) Model fallback

Model fallback is a process of deactivating the AI/ML model and switching to ordinary processing not using the AI/ML model.

### (M15) Model monitoring

Model monitoring is a procedure for monitoring inference performance of an AI/ML model.

### (M16) Model update

Model update is a process of updating model parameters and/or model structures of a model.

### (M17) Model registration

Model registration is a process of registering model parameters and/or model structures of a model.

### (M18) Model deployment

Model deployment is a generic term that refers to deployment of an AI/ML model from one entity to another entity in an optionally selected method.

### (M19) Model configuration

Model configuration is a process of configurating model parameters and/or model structures of a model.

### (M20) Model selection

Model selection is a process of selecting and activating an AI/ML model from a plurality of currently selectable AI/ML models.

In the following description, performing management of the AI/ML model based on the functionality (for example, performing the management of the AI/ML model for each use case and/or function) will be denoted as functionality-based LCM in some cases.

### <4-2. Implementation of LCM>

Next, implementation of the LCM will be described.

The communication apparatus (for example, the management apparatus 10, the base station 20, the relay station 30, or the terminal apparatus 40) of the present embodiment is configured to be capable of executing processing of a plurality of functionalities. For example, the communication apparatus according to the present embodiment is configured to be capable of executing processing related to transmission or reception of assistance information (processing of functionality A illustrated in FIG. 1), processing related to identification of a beam ID (processing of functionality B illustrated in FIG. 2), and processing related to positioning. The processing of functionality is realized using an AI/ML model.

One AI/ML model may be associated with one functionality. In this case, the communication apparatus can uniquely decide the AI/ML model when the functionality to be processed has been defined.

A plurality of AI/ML models may be associated with one functionality. In this case, when the functionality to be processed has been defined, the communication apparatus may decide the AI/ML model to be used from a plurality of AI/ML models associated with the functionality.

When the communication apparatus has a plurality of functionalities, the communication apparatus may implement management (LCM) of an AI/ML model used in processing of functionality, based on the functionality. For example, the communication apparatus may implement LCM for each use case or for each function. At this time, the communication apparatus may implement the LCM of at least one of the plurality of functionalities independently of the LCM of the other functionalities (implementation example 1). In addition, the communication apparatus may perform the LCM of all the functionalities in association with each other (implementation example 2). In addition, the communication apparatus may perform LCM of some of the plurality of functionalities in association with each other (implementation example 3).

In the following description of the implementation example, it is assumed that the communication apparatus has three functionalities in total. The three functionalities are assumed to be functionalities A, B, and C. The communication apparatus may naturally have less than three functionalities, or have more than three functionalities. Hereinafter, each of implementation examples 1 to 3 will be described in detail.

### <4-2-1. Implementation example 1>

The communication apparatus may implement the LCM of at least one of the plurality of functionalities independently of the LCM of the other functionalities. For example, the communication apparatus may control the LCM of functionality A independently of the LCM of functionality B and functionality C. Of course, the communication apparatus may independently control the LCM of all of the functionalities.

For example, the communication apparatus may implement data collection such that data collection is performed in functionality A but not performed in functionality B and functionality C. Conversely, the communication apparatus may implement data collection such that data collection is performed in functionality B and functionality C, but not in functionality A.

For example, the communication apparatus may implement model training such that model training is performed in functionality A, but not in functionality B and functionality C. Conversely, the communication apparatus may perform model training such that model training is performed in functionality B and functionality C, but not in functionality A.

For example, the communication apparatus may implement model identification such that model identification is performed in functionality A, but not in functionality B and functionality C. Conversely, the communication apparatus may implement model identification such that model identification is performed in functionality B and functionality C, but not in functionality A.

For example, the communication apparatus may implement model delivery such that model delivery is performed in functionality A, but not performed in functionality B and functionality C. Conversely, the communication apparatus may perform model delivery such that model delivery is performed in functionality B and functionality C, but not in functionality A.

For example, the communication apparatus may implement model transfer such that model transfer is performed in functionality A, but not in functionality B and functionality C. Conversely, the communication apparatus may perform model transfer such that model transfer is performed in functionality B and functionality C, but not in functionality A.

For example, the communication apparatus may implement model download such that model download is performed in functionality A, but not in functionality B and functionality C. Conversely, the communication apparatus may perform model download such that model download is performed in functionality B and functionality C, but not in functionality A.

For example, the communication apparatus may implement model upload such that model upload is performed in functionality A, but not in functionality B and functionality C. Conversely, the communication apparatus may perform model upload such that model upload is performed in functionality B and functionality C, but not in functionality A.

For example, the communication apparatus may implement model inference such that model inference is performed in functionality A, but not in functionality B and functionality C. Conversely, the communication apparatus may perform model inference such that model inference is performed in functionality B and functionality C, but not in functionality A.

For example, the communication apparatus may implement model validation such that model validation is performed in functionality A, but not in functionality B and functionality C. Conversely, the communication apparatus may implement model validation such that model validation is performed in functionality B and functionality C, but not in functionality A.

For example, the communication apparatus may implement model testing such that model testing is performed in functionality A, but not in functionality B and functionality C. Conversely, the communication apparatus may perform model testing such that model testing is performed in functionality B and functionality C, but not in functionality A.

For example, the communication apparatus may implement model activation such that model activation is performed in functionality A, but not in functionality B and functionality C. Conversely, the communication apparatus may implement model activation such that model activation is performed in functionality B and functionality C, but not in functionality A.

For example, the communication apparatus may implement model deactivation such that model deactivation is performed in functionality A, but not in functionality B and functionality C. Conversely, the communication apparatus may implement model deactivation such that model deactivation is performed in functionality B and functionality C, but not in functionality A.

For example, the communication apparatus may implement model switching such that model switching is performed in functionality A, but not in functionality B and functionality C. Conversely, the communication apparatus may perform model switching such that model switching is performed in functionality B and functionality C, but not in functionality A.

For example, the communication apparatus may implement model fallback such that model fallback is performed in functionality A, but not in functionality B and functionality C. Conversely, the communication apparatus may implement model fallback such that model fallback is performed in functionality B and functionality C, but not in functionality A.

For example, the communication apparatus may implement model monitoring such that model monitoring is performed in functionality A, but not in functionality B and functionality C. Conversely, it is allowable to implement model monitoring such that model monitoring is performed in functionality B and functionality C, but not in functionality A.

For example, the communication apparatus may implement model upload such that model update is performed in functionality A, but not in functionality B and functionality C. Conversely, the communication apparatus may perform model update such that model update is performed in functionality B and functionality C, but not in functionality A.

For example, the communication apparatus may implement model registration such that model registration is performed in functionality A, but not in functionality B and functionality C. Conversely, the communication apparatus may implement model registration such that model registration is performed in functionality B and functionality C, but not in functionality A.

For example, the communication apparatus may implement model deployment such that model deployment is performed in functionality A, but not in functionality B and functionality C. Conversely, the communication apparatus may perform model deployment such that model deployment is performed in functionality B and functionality C, but not in functionality A.

For example, the communication apparatus may implement model configuration such that model configuration is performed in functionality A, but not in functionality B and functionality C. Conversely, the communication apparatus may implement model configuration such that model configuration is performed in functionality B and functionality C, but not in functionality A.

For example, the communication apparatus may implement model selection such that model selection is performed in functionality A, but not in functionality B and functionality C. Conversely, the communication apparatus may implement model selection such that model selection is performed in functionality B and functionality C, but not in functionality A.

According to implementation example 1, the communication apparatus independently controls LCM of some or all of functionalities, making it possible to switch the control according to the characteristic of the functionality.

### <4-2-2. Implementation example 2>

The communication apparatus may perform LCM of all the functionalities in association with each other. For example, the communication apparatus may control the LCM of functionality A in association with the LCM of functionality B and functionality C.

For example, when performing data collection in functionality A, the communication apparatus similarly performs data collection in functionality B and functionality C.

For example, when performing model training in functionality A, the communication apparatus similarly performs model training in functionality B and functionality C.

For example, when performing model identification in functionality A, the communication apparatus similarly performs model identification in functionality B and functionality C.

For example, when performing model delivery in functionality A, the communication apparatus similarly performs model delivery in functionality B and functionality C.

For example, when performing model transfer in functionality A, the communication apparatus similarly performs model transfer in functionality B and functionality C.

For example, when performing model download in functionality A, the communication apparatus similarly performs the model download in functionality B and functionality C.

For example, when performing model upload in functionality A, the communication apparatus similarly performs model upload in functionality B and functionality C.

For example, when performing model inference in functionality A, the communication apparatus similarly performs model inference in functionality B and functionality C.

For example, when performing model validation in functionality A, the communication apparatus similarly performs model validation in functionality B and functionality C.

For example, when performing model testing in functionality A, the communication apparatus similarly performs model testing in functionality B and functionality C.

For example, when performing model activation in functionality A, the communication apparatus similarly performs model activation in functionality B and functionality C.

For example, when performing model deactivation in functionality A, the communication apparatus similarly performs model deactivation in functionality B and functionality C.

For example, when performing model switching in functionality A, the communication apparatus similarly performs model switching in functionality B and functionality C.

For example, when performing model fallback in functionality A, the communication apparatus similarly performs model fallback in functionality B and functionality C.

For example, when performing model monitoring in functionality A, the communication apparatus similarly performs model monitoring in functionality B and functionality C.

For example, when performing model update in functionality A, the communication apparatus similarly performs model update in functionality B and functionality C.

For example, when performing model registration in functionality A, the communication apparatus similarly performs model registration in functionality B and functionality C.

For example, when performing model deployment in functionality A, the communication apparatus similarly performs model deployment in functionality B and functionality C.

For example, when performing model configuration in functionality A, the communication apparatus similarly performs model configuration in functionality B and functionality C.

For example, when performing model selection in functionality A, the communication apparatus similarly performs model selection in functionality B and functionality C.

According to implementation example 2, by uniformly controlling LCM of all the functionalities by the communication apparatus, it is possible to reduce the amount of dynamic control information required for controlling LCM as compared with the case of independent control.

### <4-2-3. Implementation example 3>

The communication apparatus may implement the LCM of some of the plurality of functionalities in association with each other. For example, the communication apparatus may control the LCM of functionality A in association with the LCM of functionality B. At this time, the communication apparatus may control the LCM of functionality C independently of the LCM of functionality A and the LCM of functionality B.

For example, when performing data collection in functionality A, the communication apparatus similarly performs data collection in functionality B. On the other hand, the communication apparatus need not perform data collection for functionality C.

For example, when performing model training in functionality A, the communication apparatus similarly performs model training in functionality B. On the other hand, the communication apparatus need not perform model training for functionality C.

For example, when performing model identification in functionality A, the communication apparatus similarly performs model identification in functionality B. On the other hand, the communication apparatus need not perform model identification for functionality C.

For example, when performing model delivery in functionality A, the communication apparatus similarly performs model delivery in functionality B. On the other hand, the communication apparatus need not perform model delivery for functionality C.

For example, when performing model transfer in functionality A, the communication apparatus similarly performs model transfer in functionality B. On the other hand, the communication apparatus need not perform model transfer for functionality C.

For example, when performing model download in functionality A, the communication apparatus similarly performs model download in functionality B. On the other hand, the communication apparatus need not perform model download for functionality C.

For example, when performing model upload in functionality A, the communication apparatus similarly performs model upload in functionality B. On the other hand, the communication apparatus need not perform model upload for functionality C.

For example, when performing model inference in functionality A, the communication apparatus similarly performs model inference in functionality B. On the other hand, the communication apparatus need not perform model inference for functionality C.

For example, when performing model validation in functionality A, the communication apparatus similarly performs model validation in functionality B. On the other hand, the communication apparatus need not perform model validation for functionality C.

For example, when performing model testing in functionality A, the communication apparatus similarly performs model testing in functionality B. On the other hand, the communication apparatus need not perform model testing for functionality C.

For example, when performing model activation in functionality A, the communication apparatus similarly performs model activation in functionality B. On the other hand, the communication apparatus need not perform model activation n for functionality C.

For example, when performing model deactivation in functionality A, the communication apparatus similarly performs model deactivation in functionality B. On the other hand, the communication apparatus need not perform model deactivation for functionality C.

For example, when performing model switching on functionality A, the communication apparatus similarly performs model switching on functionality B. On the other hand, the communication apparatus need not perform model switching for functionality C.

For example, when performing the model fallback on functionality A, the communication apparatus similarly performs model fallback on functionality B. On the other hand, the communication apparatus need not perform model fallback for functionality C.

For example, when performing model monitoring in functionality A, the communication apparatus similarly performs model monitoring in functionality B. On the other hand, the communication apparatus need not perform model monitoring for functionality C.

For example, when performing model update in functionality A, the communication apparatus similarly performs model update in functionality B. On the other hand, the communication apparatus does not need to perform model update for functionality C.

For example, when performing model registration in functionality A, the communication apparatus similarly performs model registration in functionality B. On the other hand, the communication apparatus need not perform model registration for functionality C.

For example, when performing model deployment in functionality A, the communication apparatus similarly performs model deployment in functionality B. On the other hand, the communication apparatus need not perform model deployment for functionality C.

For example, when performing model configuration in functionality A, the communication apparatus similarly performs model configuration in functionality B. On the other hand, the communication apparatus need not perform model configuration for functionality C.

For example, when performing model selection in functionality A, the communication apparatus similarly performs model selection in functionality B. On the other hand, the communication apparatus need not perform model selection for functionality C.

According to implementation example 3, by controlling the LCM of some of the functionalities by the communication apparatus in association with each other, it is possible to reduce the amount of dynamic control information required for controlling the LCM as compared with the case of controlling the LCM of all functionalities.

### <4-2-4. Other implementation examples>

A plurality of management functions included in the LCM may be divided into a management function that can be associated and a management function that is difficult to be associated and needs to be independently controlled. Therefore, the communication apparatus may switch LCM implementation means for each management function included in the LCM. The management function may be one of: (M1) Data collection) to (M20) Model selection.

For example, each of LCM of a plurality of functionalities included in the communication apparatus is supposed to include a plurality of management functions including a first management function (for example, model activation). At this time, the communication apparatus may perform the first management function included in LCM of at least one of the plurality of functionalities in association with the first management function included in the LCM of another functionality. At this time, the communication apparatus may perform the first management function in association with all of the functionalities.

In addition, each of LCM of a plurality of functionalities included in the communication apparatus is supposed to include a plurality of management functions including a second management function (for example, model transfer). At this time, the communication apparatus may perform the second management function included in LCM of at least one of the plurality of functionalities independently of the second management function included in the LCM of another one or a plurality of functionalities. At this time, the communication apparatus may perform the second management function independently for each functionality.

According to the present implementation example, it is possible to implement LCM more efficiently. For example, there is an assumable case where, when the processing using the AI/ML model is performed in a plurality of functionalities, the communication apparatus activates the AI/ML models of the plurality of functionalities at the same timing. In this case, the communication apparatus controls the model activation in association with all the functionalities, making it possible to activate the AI/ML models of all the functionalities by one activation control. On the other hand, for example, it is assumed that model transfer, which is one type of LCM, is performed as necessary for each functionality. In this case, the communication apparatus independently controls the transfer of the model for each functionality, thereby enabling flexible transfer of the model.

### <4-3. Operation of entity>

Next, the operation of each entity related to implementation of functionality-based LCM will be described.

### <4-3-1. Operation of base station>

First, the operation of the base station 20 will be described.

The base station 20 may make a decision related to the association of the LCM among the plurality of functionalities.

For example, the base station 20 may decide which functionality is to be independently controlled in implementing the functionality-based LCM. In addition, the base station 20 may decide which functionality is to be associated with which functionality in the control when implementing functionality-based LCM.

The plurality of functionalities included in the base station 20 may be functionalities related to communication with the terminal apparatus 40. In addition, the base station 20 may transmit the decision related to LCM association to the terminal apparatus 40. For example, when performing functionality-based LCM, the base station 20 may notify the terminal apparatus 40 of the information related to functionality-based LCM to be controlled independently and the information related to functionality-based LCM to be controlled in association with each other.

The plurality of functionalities included in the base station 20 may be functionalities related to communication with the terminal apparatus 40. In performing the control related to the association of functionality-based LCM, the base station 20 may request the terminal apparatus 40 to transmit information necessary for the control related to the association of functionality-based LCM on the base station 20 side. The information necessary for the control related to the association is assumed to include an implementation result of the LCM on the terminal apparatus 40 side and a measurement result, for example.

The plurality of functionalities included in the base station 20 may be functionalities related to communication with the terminal apparatus 40. In performing the control related to the association of functionality-based LCM, the base station 20 may acquire, from the terminal apparatus 40, information necessary for the control related to the association of functionality-based LCM on the base station 20 side. The information necessary for the control related to the association is assumed to include an implementation result of the LCM on the terminal apparatus 40 side and a measurement result, for example. The base station 20 may make a decision related to association of functionality-based LCM based on information from another communication apparatus.

### <4-3-2. Operation of terminal apparatus>

Next, an operation of the terminal apparatus 40 will be described.

The terminal apparatus 40 may make a decision related to the association of the LCM among the plurality of functionalities.

For example, the terminal apparatus 40 may decide which functionality is to be independently controlled based on information acquired in advance when implementing functionality-based LCM. In addition, when implementing functionality-based LCM, the terminal apparatus 40 may decide which functionality is to be controlled in association with each other based on information acquired in advance.

The plurality of functionalities included in the terminal apparatus 40 may be functionalities related to communication with the base station 20. When performing functionality-based LCM, the terminal apparatus 40 may acquire, from the base station 20, the information related to functionality-based LCM to be controlled independently and the information related to functionality-based LCM to be controlled in association with each other. The terminal apparatus 40 may then make a decision related to the management association based on the information from the base station 20.

The plurality of functionalities included in the terminal apparatus 40 may be functionalities related to communication with the base station 20. In performing the control related to the association of functionality-based LCM, the terminal apparatus 40 may receive, from the base station 20, a transmission request for information necessary for the control related to the association of the functionality-based LCM on the base station 20 side. The information necessary for the control related to the association is assumed to include an implementation result of the LCM on the terminal apparatus 40 side and a measurement result, for example.

The plurality of functionalities included in the terminal apparatus 40 may be functionalities related to communication with the base station 20. When performing the control related to the association of functionality-based LCM, the terminal apparatus 40 may notify the base station 20 of information necessary for the control related to the association of functionality-based LCM on the base station 20 side, such as an implementation result and a measurement result of the LCM on the terminal apparatus 40 side. The information necessary for the control related to the association is assumed to include an implementation result of the LCM on the terminal apparatus 40 side and a measurement result, for example.

### <4-3-3. Others>

Next, an operation of the core network CN related to implementation of the functionality-based LCM will be described.

As described above, the core network CN may have an LCM-related network function. The LCM-related network function is a network function that provides a function of LCM-related control. For example, the LCM-related network function may be included in the MTLF 551 illustrated in FIG. 9. The LCM-related network function may be included in a server (for example, the MEC server 552 illustrated in FIG 9) connected to the UPF 521. The LCM-related network function may be included in a server (for example, the MEC server 553 illustrated in FIG. 9) connected to base station 20 ((R)AN 530). In addition, the LCM-related network function 554 may be included in the core network CN as one of the control plane function group 540.

A communication apparatus (for example, the base station 20, the relay station 30, and the terminal apparatus 40) directly or indirectly connected to the core network CN may acquire information necessary for implementation of functionality-based LCM from the core network CN(for example, the management apparatus 10). Subsequently, the communication apparatus may perform functionality-based LCM based on the information acquired from the core network CN.

### <4-4. Discerning functionality>

The plurality of functionalities included in the communication apparatus may be functionalities related to communication between the communication apparatuses. In implementing the functionality-based LCM, the plurality of communication apparatuses (for example, the terminal apparatus 40 and the base station 20) that performs communication needs to have common recognition as to for which functionality LCM is to be implemented. Hereinafter, a functionality discerning means will be described.

### <4-4-1. Discerning means 1>

One of two communication apparatuses that perform communication may notify the other communication apparatus of identification information (functionality ID) for identifying the functionality. The other communication apparatus may discern the functionality of the implementation target of the LCM based on the identification information. For example, the base station 20 notifies the terminal apparatus 40 of the functionality ID. Subsequently, the terminal apparatus 40 discerns the functionality based on the functionality ID.

### <4-4-2. Discerning means 2>

One of the communication apparatuses may notify the other communication apparatus of identification information (AI/ML model ID) for identifying the AI/ML model. The functionality is associated with one or a plurality of AI/ML models. The other communication apparatus may discern the functionality based on the notified AI/ML model ID.

For example, the base station 20 preliminarily provides the terminal apparatus 40 with information related to association between the AI/ML model ID and functionality. The base station 20 notifies the terminal apparatus 40 of information of the AI/ML model ID, as LCM-related control information, for example. The terminal apparatus 40 discerns the functionality based on the received information of the AI/ML model ID and the information related to the association between the AI/ML model ID and functionality acquired in advance.

### <4-4-3. Discerning means 3>

The communication apparatus may discern the functionality based on functionality configuration. For example, the base station 20 notifies the terminal apparatus 40 of RRC signaling defined for each functionality. At this time, the base station 20 notifies the terminal apparatus 40 of the information related to LCM using different messages, different information fields, or different information elements, for each functionality. The terminal apparatus 40 discerns functionality depending on which message or which information field or which information element has been received.

### <4-4-4. Discerning means 4>

The communication apparatus may discern the functionality based on the type of the AI/ML model to be applied. Assumable AI/ML models include the following (A1) to (A4).

### (A1) UE-side (AI/ML) model

A UE-side (AI/ML) model is an AI/ML model in which inference is fully performed in the UE.

### (A2) Network side (AI/ML) model

A network-side (AI/ML) model is an AI/ML model in which inference is fully performed in the network.

### (A3) One-sided (AI/ML) model

The one-sided (AI/ML) model is either a UE-side (AI/ML) model or a network-side (AI/ML) model.

### (A4) Two-sided (AI/ML) model

The two-sided (AI/ML) model is a paired AI/ML model in which inference is performed jointly. The joint inference includes AI/ML inference, and the inference is performed jointly by the UE and the network. That is, the initial part of the inference is initially performed by the UE, and then the remaining part is performed by the base station.

### <4-4-5. Discerning means 5>

For discerning the functionality, Functionality Radio Network Temporary Identifier (functionality RANTI) may be stipulated. The base station 20 assigns functionality RANTI information to the control information. The terminal apparatus 40 determines functionality based on the functionality RANTI assigned to the control information. This makes it possible for the terminal apparatus 40 to determine which functionality the received control information relates to. The functionality RANTI may be used in scrambling of cyclic redundancy check (CRC) information assigned to Downlink Control Information (DCI), Radio Resource Control Signaling (RRC), or the like, for example.

### <4-4-5. Discerning means 5>

The communication apparatus may discern the functionality based on input information to the AI/ML model and/or output information from the AI/ML model. At this time, the input information and/or the output information may be, for example, one or a plurality of pieces of information among the following pieces of information (B1) to (B15). Needless to say, the input information and/or the output information are not limited to the following information.
(B1) Channel Quality Information (CQI)
(B2) Precoding Matrix Indicator (PMI)
(B3) CSI-RS Resource Indicator (CRI)
(B4) SS/PBCH Resource Block Indicator (SSBRI)
(B5) Layer Indicator (LI)
(B6) Rank Indicator (RI)
(B7) Layer 1 Reference Signal Received Power (L1-RSRP)
(B8) Interference level with other cells
(B9) Position estimation information of terminal apparatus 40
(B10) Location information of base station 20
(B11) Channel Matrix
(B12) Eigenvector
(B13) Beam ID
(B14) Timing error information
(B15) Line Of Sight (LOS)/Non Line Of Sight (NLOS) information

The communication apparatus may discern the functionality based on the input information and/or the output information. For example, in a case where the AI/ML model is applied to the transmission of the PMI, the communication apparatus determines that the functionality of the processing is functionality A. Furthermore, in a case where the AI/ML model is applied to the determination of beam ID, the communication apparatus determines that the functionality of the processing is functionality B. In this manner, the communication apparatus can discern the functionality based on the input information to the AI/ML model and/or the output information from the AI/ML model. The discerning processing illustrated here is merely an example. The discerning processing is not limited thereto.

### <4-4-6. Discerning means 6>

The communication apparatus may discern the functionality based on a compatibility status of the communication apparatus (for example, the base station 20) and capability information of another communication apparatus (for example, the terminal apparatus 40).

For example, the plurality of functionalities included in the communication apparatus (for example, the base station 20) may be functionalities related to communication with another communication apparatus (for example, the terminal apparatus 40). The communication apparatus may acquire capability information (for example, UE Capability of the terminal apparatus 40) of the another communication apparatus from the another communication apparatus. The communication apparatus (for example, the base station 20) may discern the functionality applicable by another communication apparatus (for example, the terminal apparatus 40) based on the acquired capability information. The communication apparatus may notify the another communication apparatus of the functionality to which the AI/ML model is applied.

The information notified from the communication apparatus (for example, the base station 20) to another communication apparatus (for example, the terminal apparatus 40) may include, for example, functionality information (for example, functionality ID) to which an AI/ML model is applied. Furthermore, the information notified from the communication apparatus (for example, the base station 20) to another communication apparatus (for example, the terminal apparatus 40) may include, for example, related information between functionalities in a case where the LCM is performed in association with another functionality.

### <4-5. Controlling LCM>

In the LCM of functionality, it is allowable to introduce event-trigger-based control or periodic-based control.

### <4-5-1. Example of event-trigger-based control>

The communication apparatus may perform the LCM at a timing when a predetermined event occurs. In addition, the communication apparatus may perform LCM at a timing of reception of a notification issued at a timing when a predetermined event occurs, from another communication apparatus. Assumable timings at which the predetermined event occurs include the following (C1) to (C14). Note that the timing described below is merely an example. The timing at which the predetermined event occurs is not limited to the following.
(C1) Timing at which training of AI/ML model is completed
(C2) Timing at which training of AI/ML model is started
(C3) Timing at which AI/ML model is expired (Timer Expired, etc.)
(C4) Timing at which validity of AI/ML model is judged to be invalid
(C5) Timing at which AI/ML model is judged to need updating
(C6) Timing at which training data is expired (Timer Expired, etc.)
(C7) Timing at which AI/ML model is downloaded
(C8) Timing at which AI/ML model is uploaded
(C9) Timing at which transfer of AI/ML model is performed
(C10) Timing at which inference of AI/ML model is performed
(C11) Timing at which activation of AI/ML model is performed
(C12) Timing at which deactivation of AI/ML model is performed
(C13) Timing at which AI/ML model is switched
(C14) Timing at which fallback of AI/ML model is performed to switch to ordinary processing not using AI/ML model

### <4-5-2. Example of periodic-based control>

The communication apparatus may perform the LCM at a predetermined temporal timing (for example, a set slot (Slot), a symbol (Symbol), or the like). Furthermore, the communication apparatus may perform the LCM at a timing of receiving a notification performed at a predetermined temporal timing (for example, a set slot, symbol, etc.) from another communication apparatus.

### <4-5-3. Others>

The base station 20 may notify the terminal apparatus 40 of the control information related to LCM for each functionality. The base station 20 may control the control information notification on an event trigger basis or a period basis.

The base station 20 may request the terminal apparatus 40 to notify control information related to LCM for each functionality. The terminal apparatus 40 that has received the request may notify the base station 20 of the control information related to LCM. The base station 20 may control the request for the control information notification on an event trigger basis or a period basis. Furthermore, the terminal apparatus 40 may control the control information notification on an event trigger basis or a period basis.

The base station 20 may perform, for each functionality, the setting related to implementation of measurement required for the LCM on the terminal apparatus 40. The base station 20 may control the setting related to implementation of measurement on an event trigger basis or a period basis. In addition, the terminal apparatus 40 may control implementation of measurement on an event trigger basis or a period basis.

In a case where the above-described control (for example, event-trigger-based or periodic-based control) is set to any one of a plurality of functionalities, the communication apparatus may apply the similar setting to another functionality being associated.

In a case where the above-described control (for example, event-trigger-based or periodic-based control) is set to a plurality of functionalities among the plurality of functionalities, the communication apparatus may apply similar setting to another functionality being associated. At this time, the communication apparatus may set most recently set information among the plurality of settings, as a valid setting.

For example, functionality A and functionality B are assumed to be associated with each other. First, when control 1 is set to functionality A, the communication apparatus also sets the control 1 to functionality B. Thereafter, when control 2 is set to functionality B, the communication apparatus overwrites control setting of functionality A with the control 2.

In a case where different controls are simultaneously set for a plurality of functionalities, the communication apparatus (for example, the terminal apparatus 40) may notify another communication apparatus (for example, the base station 20) of an inappropriate setting by returning NACK or the like. Alternatively, the communication apparatus may enable any of the settings based on a predetermined priority. Still, alternatively, the implementation of the communication apparatus (for example, the base station 20 and/or the terminal apparatus 40) may stipulate that different controls are not to be simultaneously set for a plurality of functionalities.

### <4-6. Operation during handover>

Regarding handover, when the terminal apparatus 40 undergoes handover to another base station 20, the base station 20 (source base station 20) may notify another target base station 20 (target base station 20) of the information related to functionality-based LCM. Having received the information from the source base station 20, the target base station 20 may implement functionality-based LCM based on the received information.

The communication apparatus may restrict or decide the handover destination based on capability information related to the AI/ML model of the base station 20 or the terminal apparatus 40 and/or information related to functionality-based LCM, for example. Here is an exemplary case where the terminal apparatus 40 performs handover. At this time, in a case where the target base station 20 cannot use the trained AI/ML model, the terminal apparatus 40 and the target base station 20 need to newly train the AI/ML model. In this case, new training processing is required in the terminal apparatus 40 and the base station 20, increasing the processing loads on the terminal apparatus 40 and the base station 20. To handle this, when the terminal apparatus 40 performs a handover, the handover is performed on the target base station 20 that can reuse a trained AI/ML model in the handover destination. In performing this, the base station 20 or the terminal apparatus 40 may judge whether the base station 20 being a target candidate can use the trained AI/ML model, based on the information related to functionality-based LCM. Subsequently, the terminal apparatus 40 may perform the handover targeted for the base station 20 that has been discerned to be able to use the trained AI/ML model.

### <4-7. Sequence example>

Based on the above, a sequence example of the communication processing of the present embodiment will be described. In the following description, processing of the communication performed between the base station 20 and the terminal apparatus 40 will be described. Note that the following assumes that the terminal apparatus 40 has three functionalities A, B, and C.

### <4-7-1. Representative sequence example>

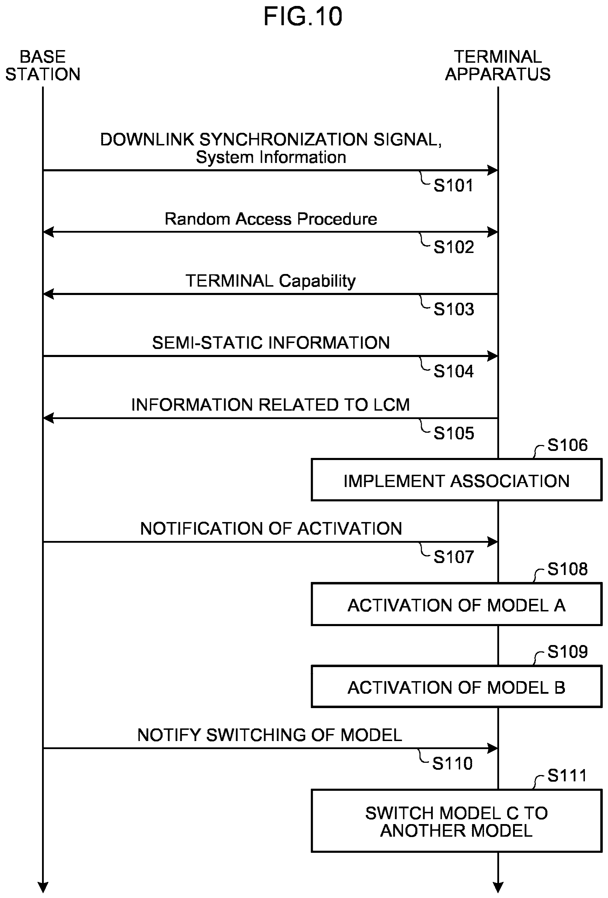

First, a representative sequence example will be described. FIG. 10 is a diagram illustrating a representative sequence example of communication processing of the present embodiment. The communication processing according to the present embodiment will be described below with reference to FIG. 10.

The terminal apparatus 40 receives a synchronization signal transmitted from the base station 20 and performs downlink synchronization. Thereafter, the terminal apparatus 40 receives system information transmitted from the base station 20, and receives information necessary for cell connection (step S101). Here, the system information may include an explicit notification related to LCM.

The terminal apparatus 40 performs a random access procedure to implement connection with the base station 20 (step S102). Through this procedure, the terminal apparatus 40 performs uplink synchronization to complete the connection to the base station 20.

The terminal apparatus 40 notifies the base station 20 of capability information regarding the terminal apparatus 40 (step S103). The terminal apparatus 40 may include capability information related to implementation of LCM in the capability information.

The base station 20 notifies the terminal apparatus 40 of semi-static control information (step S104). This may be referred to as RRC signaling. The base station 20 notifies the terminal apparatus 40 of the information related to LCM (step S105). Here, the terminal apparatus 40 is assumed to have received information related to LCM for each functionality. The base station 20 may include information related to LCM in the semi-static control information.

The terminal apparatus 40 performs association of functionality based on the information related to LCM (step S106). The following description will assume that LCM is implemented with functionality A and functionality B in association with each other, while LCM is independently implemented in functionality C.

The base station 20 notifies the terminal apparatus 40 of the execution of activation of the AI/ML model of functionality A (step S107). The terminal apparatus 40 activates the AI/ML model (model A) of functionality A (step S108). Here, the AI/ML model (model B) of functionality B associated with functionality A is similarly activated (step S109).

Next, the base station 20 notifies the terminal apparatus 40 of switching of the AI/ML model with respect to functionality C (step S110). The terminal apparatus 40 switches the AI/ML model (model C) of functionality C to another AI/ML model (step S111). Note that LCM is performed independently in functionality C. Accordingly, the terminal apparatus 40 does not perform LCM related to the switching of the AI/ML model regarding functionality A and functionality B.

### <4-7-2. Sequence example during handover>

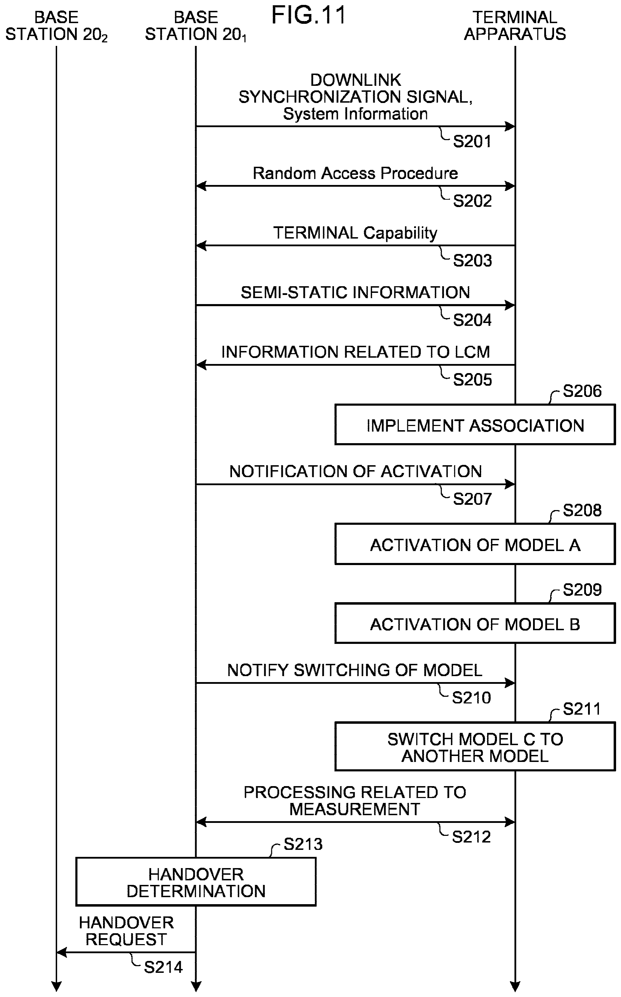

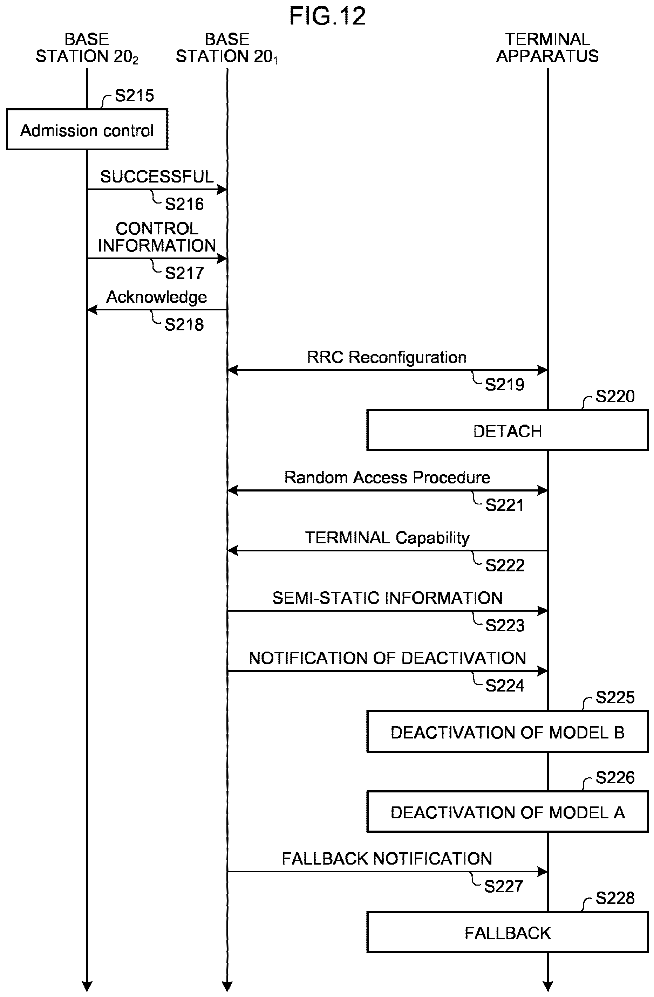

Next, a sequence example in a case where handover is performed will be described. FIGS. 11 and 12 are diagrams illustrating sequence examples in a case where handover is performed. The communication processing according to the present embodiment will be described below with reference to FIGS. 11 and 12.

The terminal apparatus 40 receives a synchronization signal transmitted from the base station 20₁ and performs downlink synchronization. Thereafter, the terminal apparatus 40 receives system information transmitted from the base station 20₁, and receives information necessary for cell connection (step S201 illustrated in FIG. 11). Here, the system information may include an explicit notification related to LCM.

Next, the terminal apparatus 40 performs a random access procedure to implement connection with the base station 20₁ (step S202). Through this procedure, the terminal apparatus 40 performs uplink synchronization to complete the connection to the base station 20₁.

The terminal apparatus 40 notifies the base station 20₁ of capability information regarding the terminal apparatus 40 (step S203). The terminal apparatus 40 may include capability information related to implementation of LCM in the capability information.

The base station 20₁ notifies the terminal apparatus 40 of semi-static control information (step S204). This may be referred to as RRC signaling. The base station 20₁ notifies the terminal apparatus 40 of the information related to LCM (step S205). Here, the terminal apparatus 40 is assumed to have received information related to LCM for each functionality. The base station 20₁ may include information related to LCM in the semi-static control information.

The terminal apparatus 40 performs association of functionality based on the information related to LCM (step S206). The following description will assume that LCM is implemented with functionality A and functionality B in association with each other, while LCM is independently implemented in functionality C.

The base station 20₁ notifies the terminal apparatus 40 of the execution of activation of the AI/ML model of functionality A (step S207). The terminal apparatus 40 activates the AI/ML model (model A) of functionality A (step S208). Here, the AI/ML model (model B) of functionality B associated with functionality A is similarly activated (step S209).

Next, the base station 20₁ notifies the terminal apparatus 40 of switching of the AI/ML model with respect to functionality C (step S210). The terminal apparatus 40 switches the AI/ML model (model C) of functionality C to another AI/ML model (step S211). Note that LCM is performed independently in functionality C. Accordingly, the terminal apparatus 40 does not perform LCM related to the switching of the AI/ML model regarding functionality A and functionality B.

The base station 20₁ (source cell) and the terminal apparatus 40 perform a measurement procedure related to the connected cell (step S212).

The base station 20₁ makes a handover determination based on a result of the measurement procedure (step S213). Here, the base station 20₁ determines that a handover is necessary and performs a handover procedure. At this time, the base station 20₁ notifies a handover request to the base station 20 (the base station 20₂ in this sequence example) that can be the target cell (step S214).

Now, referring to FIG. 12, having received the handover request, the base station 20₂ that can be the target cell performs processing such as handover admission determination (step S215), and notifies the source cell of handover request acknowledgement (step S216).

At this time, the base station 20₁ may notify the base station 20₂ of the information related to LCM (for example, association information of functionality-based LCM or the like) (step S217). Upon receiving the information related to LCM, the base station 20₂ may return an acknowledgement to the base station 20₁ (step S218).

The base station 20₁ performs RRC reconfiguration on the terminal apparatus 40 (step S219), and notifies the terminal apparatus 40 of information related to handover. The information related to handover may include information related to LCM. For example, the information related to handover may include association information of the functionality-based LCM.

Subsequently, the terminal apparatus 40 detaches from the base station 20₁ (step S220). Thereafter, the terminal apparatus 40 performs a random access procedure (step S221) to implement connection with the base station 20₂. Through this procedure, the terminal apparatus 40 performs uplink synchronization to complete the connection to the base station 20₂.

The terminal apparatus 40 may notify the base station 20₂ of capability information regarding the terminal apparatus 40 (step S221). The terminal apparatus 40 may include capability information related to implementation of LCM in the capability information. The capability information of the terminal apparatus 40 may be shared between the base station 20₁ and the base station 20₂.

The base station 20₂ notifies the terminal apparatus 40 of semi-static control information (step S223). This may be referred to as RRC signaling. The base station 20₂ may include information related to LCM in the semi-static control information in this notification.

The terminal apparatus 40 may perform association of functionality based on the information related to LCM. The following description will assume that LCM is implemented in functionality A and functionality B in association with each other, while LCM is independently implemented in functionality C, with no change from the setting before handover.

The base station 20₁ notifies the terminal apparatus 40 of the execution of deactivation of the AI/ML model of functionality B (step S224). The terminal apparatus 40 deactivates the AI/ML model (model A) of functionality B (step S225). Here, the AI/ML model (model A) of functionality A associated with functionality B in LCM processing is similarly deactivated (step S226).

Next, the base station 20₁ notifies the terminal apparatus 40 of fallback of the AI/ML model with respect to functionality C (step S227). The terminal apparatus 40 deactivates the processing using the AI/ML model (model C) of functionality C and performs fallback to ordinary processing (step S228). Note that LCM is performed independently in functionality C. Accordingly, the terminal apparatus 40 does not perform LCM related to the fallback of the AI/ML model regarding functionality A or functionality B.

### <4-8. Management processing example>

The communication processing performed between the terminal apparatus 40 and the base station 20 has been described above using the sequence diagram. Next, with reference to a flowchart, a processing example related to LCM of each of the terminal apparatus 40 side and the base station 20 side in the communication processing will be described. Note that the following assumes that the terminal apparatus 40 has three functionalities A, B, and C.

### <4-8-1. Processing example on terminal apparatus side>

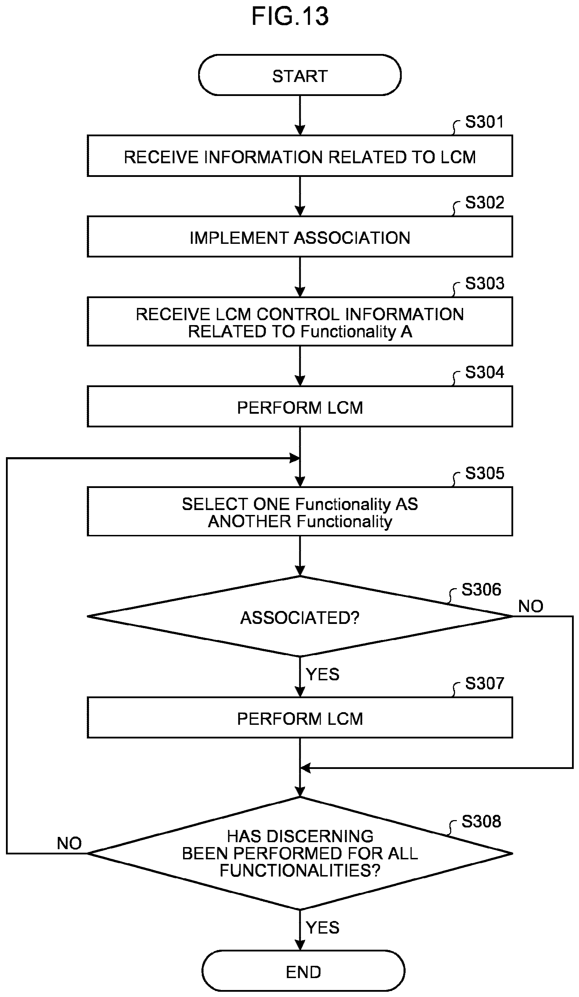

First, a processing example on the terminal apparatus 40 side will be described. FIG. 13 is a flowchart illustrating management processing executed by the terminal apparatus 40. The management processing is processing related to LCM. The management processing is executed by the control unit 43 of the terminal apparatus 40, for example. Hereinafter, the management process executed by the terminal apparatus 40 will be described with reference to FIG. 13.

First, the acquisition unit 431 of the terminal apparatus 40 receives information related to LCM from the base station 20 (step S301). Here, the terminal apparatus 40 is assumed to have received information related to LCM for each functionality.

Subsequently, the decision unit 434 of the terminal apparatus 40 makes a decision related to the association of the LCM based on the information related to LCM. Subsequently, the decision unit 434 performs association of functionality (step S302). The following description will assume that LCM is implemented with functionality A and functionality B in association with each other, while LCM is independently implemented in functionality C.

Subsequently, the acquisition unit 431 of the terminal apparatus 40 receives LCM control information related to functionality A from the base station 20 (step S303). For example, the acquisition unit 431 receives control information related to activation of the AI/ML model in functionality A from the base station 20. At this time, the discerning unit 433 of the terminal apparatus 40 may discern which functionality among a plurality of functionalities is a target of application of the LCM indicated by the control information.

Subsequently, the management unit 432 of the terminal apparatus 40 performs the LCM related to functionality A based on the control information received from the base station 20 (step S304). For example, the management unit 432 activates the AI/ML model of functionality A.

Subsequently, the discerning unit 433 of the terminal apparatus 40 selects one of the other functionalities (step S305). For example, the discerning unit 433 selects functionality B or functionality C. Subsequently, the discerning unit 433 discerns whether the selected functionality is associated with functionality A (step S306).

When the functionality is associated (step S306: Yes), the management unit 432 of the terminal apparatus 40 also performs the LCM similar to the LCM performed in step S304 for the selected functionality (step S307). For example, here is an assumable case where the functionality is B selected in step S305 and the LCM performed in step S304 is the activation of the AI/ML model. In this case, the management unit 432 activates the AI/ML model of functionality B similarly to functionality A.

In contrast, when the functionality is not associated (step S306: No), the control unit 43 of the terminal apparatus 40 proceeds to the processing of step S308 without performing LCM. For example, here is an assumable case where the functionality is functionality C selected in step S305 and the LCM performed in step S304 is the activation of the AI/ML model. In this processing example, since LCM is performed independently for functionality C, the control unit 43 proceeds to the processing of step S308 without activating the AI/ML model of functionality C.

Subsequently, the discerning unit 433 of the terminal apparatus 40 discerns whether the discerning in step S306 has been executed for all the functionalities (step S308). When there is functionality that has not yet been discerned (step S308: No), the control unit 43 of the terminal apparatus 40 returns the processing to step S305. When the discerning has been completed for all the functionalities (step S308: Yes), the control unit 43 completes the management processing.

### <4-8-2. Processing example on base station side>

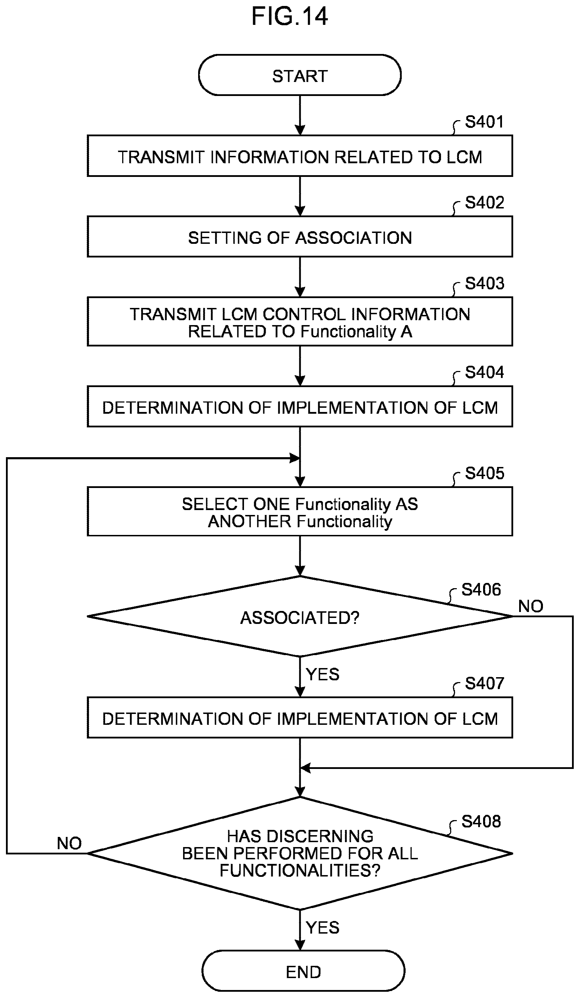

Next, a processing example on the base station 20 side will be described. FIG. 14 is a flowchart illustrating management processing executed by the base station 20. The management processing is processing related to LCM. The management processing is executed by the control unit 23 of the base station 20, for example. The management processing executed by the base station 20 will be described below with reference to FIG. 14.

First, the decision unit 234 of the base station 20 makes a decision related to the association of the LCM. The transmission unit 235 of the base station 20 transmits the information related to LCM to the terminal apparatus 40 (step S401). Here, the base station 20 is supposed to have transmitted information related to LCM for each functionality.

Subsequently, the control unit 23 of the base station 20 sets association of a plurality of functionalities included in the terminal apparatus 40 (step S402). The following description will assume that, in the terminal apparatus 40, LCM is performed with functionality A and functionality B in association with each other, while LCM is implemented independently for functionality C.

Subsequently, the transmission unit 235 of the base station 20 transmits LCM control information related to functionality A to the terminal apparatus 40 (step S403). For example, the transmission unit 235 transmits control information related to activation of the AI/ML model of functionality A to the terminal apparatus 40. In a case where the base station 20 has a functionality corresponding to functionality A of the terminal apparatus 40, the management unit 232 of the base station 20 may perform LCM on the functionality corresponding to functionality A.

Subsequently, the discerning unit 233 of the base station 20 determines that the implementation of the LCM related to functionality A has been completed in the terminal apparatus 40 (step S404). For example, in a case where a response indicating successful reception of the control information has been received from the terminal apparatus 40, the discerning unit 233 determines completion of the activation of the AI/ML model of functionality A in the terminal apparatus 40.

Subsequently, the discerning unit 233 of the base station 20 selects one of the other functionalities (step S405). For example, discerning unit 233 selects either functionality B or functionality C. Subsequently, the discerning unit 233 discerns whether the selected functionality is associated with functionality A (step S406) .

When the functionality is associated (step S406: Yes), the discerning unit 233 of the base station 20 also determines that the implementation of the LCM similar to the LCM determined to be completed in step S404 in the terminal apparatus 40 for the selected functionality (step S407). For example, here is an assumable case where the functionality is B selected in step S405 and the LCM determined to have been completed in step S404 is the activation of the AI/ML model. In this case, the discerning unit 233 also determines that the activation is completed for the AI/ML model of functionality B in the terminal apparatus 40. Note that, in a case where the base station 20 has a functionality corresponding to functionality B of the terminal apparatus 40, the management unit 232 of the base station 20 may perform LCM on the functionality corresponding to functionality B.

In contrast, when the functionality is not associated (step S406: No), the control unit 23 of the base station 20 proceeds to the processing of step S408 without determining the completion of LCM. For example, it is assumed that functionality C selected in step S405 and the LCM determined to be completed in step S404 are activations of the AI/ML model. In this processing example, since LCM is performed independently for functionality C, the control unit 23 proceeds to the processing of step S408 without determining completion of activation of the AI/ML model of functionality C.

Subsequently, the discerning unit 233 of the base station 20 discerns whether the discerning in step S406 has been executed for all the functionalities (step S408). When there is functionality that has not yet been discerned (step S408: No), the control unit 23 of the base station 20 returns the processing to step S405. When the discerning has been completed for all the functionalities (step S408: Yes), the control unit 23 completes the management processing.

### <<5. Modification>>

The above-described embodiment is an example, and various modifications and applications are possible.

In the above-described embodiment, the technology of the present disclosure has been described by taking an example of the communication processing between the base station 20 and the terminal apparatus 40. However, the application range of the present embodiment is not limited thereto. For example, the technology of the present disclosure is also applicable to communication between a plurality of communication apparatuses selected from the management apparatus 10, the base station 20, the relay station 30, and the terminal apparatus 40. Furthermore, the technology of the present disclosure is also applicable to communication between the management apparatuses 10, between the base stations 20, between the relay stations 30, or between the terminal apparatuses 40. Furthermore, the technology of the present disclosure is also applicable to processing performed by the management apparatus 10, the base station 20, the relay station 30, and the terminal apparatus 40 independently using the AI/ML model.

The functions of the blocks (the acquisition unit 231 to the reception unit 236) included in the control unit 23 of the base station 20 may be similar to the functions of the blocks (the acquisition unit 431 to the reception unit 436) included in the control unit 43 of the terminal apparatus 40, respectively. Furthermore, the function of each block (the acquisition unit 331 to the reception unit 336) included in the control unit 33 of the relay station 30 may be similar to the function of each block included in the control unit 23 of the base station 20, or may be similar to each block included in the control unit 23 of the terminal apparatus 40. Furthermore, the function of each block included in the control unit 43 of the terminal apparatus 40 may be similar to the function of each block included in the control unit 23 of the base station 20. In addition, the function of the control unit 13 of the management apparatus 10 may be similar to the function of the control unit 23 of the base station 20, may be similar to the function of the control unit 33 of the relay station 30, or may be similar to the function of the control unit 43 of the terminal apparatus 40.

A control apparatus that controls the management apparatus 10, the base station 20, the relay station 30, and the terminal apparatus 40 of the present embodiment may be actualized by a dedicated computer system or a general-purpose computer system.

For example, a communication program for executing the above-described operations is stored in a computer-readable recording medium such as an optical disk, semiconductor memory, a magnetic tape, or a flexible disk and distributed. For example, the program is installed on a computer and the above processing is executed to achieve the composition of the control apparatus. At this time, the control apparatus may be an apparatus (for example, a personal computer) external to the management apparatus 10, the base station 20, the relay station 30, or the terminal apparatus 40. Furthermore, the control apparatus may be an internal apparatus (for example, the control unit 13, the control unit 23, the control unit 33, or the control unit 43) of the management apparatus 10, the base station 20, the relay station 30, or the terminal apparatus 40.

Furthermore, the communication program can be stored in a disk device included in a server on a network such as the Internet so as to be able to be downloaded to a computer, for example. Furthermore, the functions described above may be realized by using operating system (OS) and application software in cooperation. In this case, the portions other than the OS may be stored in a medium for distribution, or the portions other than the OS may be stored in a server so as to be downloaded to a computer, for example.

Furthermore, among individual processing described in the above embodiments, all or a part of the processing described as being performed automatically may be manually performed, or the processing described as being performed manually can be performed automatically by known methods. In addition, the processing procedures, specific names, and information including various data and parameters illustrated in the above Literatures or drawings can be flexibly altered unless otherwise specified. For example, various types of information illustrated in each of the drawings are not limited to the information illustrated.

In addition, each of components of each device is provided as a functional and conceptional illustration and thus does not necessarily need to be physically constituted as illustrated. That is, the specific form of distribution/integration of each of The apparatuses is not limited to those illustrated in the drawings, and all or a part thereof can be functionally or physically distributed or integrated into optionally determined units in accordance with various loads and use status. This configuration by distribution or integration may be performed dynamically.

Furthermore, the above-described embodiments can be appropriately combined within a range implementable without contradiction of processing. Furthermore, the order of individual steps illustrated in the flowchart or the sequence diagram of the above-described embodiment can be altered as appropriate.

Furthermore, for example, the present embodiment can be implemented as any configuration constituting an apparatus or a system, for example, a processor as a large scale integration (LSI) or the like, a module using a plurality of processors or the like, a unit using a plurality of modules or the like, and a set obtained by further adding other functions to the unit, or the like (that is, a configuration of a part of the apparatus).

In the present embodiment, a system represents a set of a plurality of components (devices, modules (parts), or the like), and whether all the components are in the same housing would not be a big issue. Therefore, a plurality of devices housed in separate housings and connected via a network, and one device in which a plurality of modules are housed in one housing, are both systems.

Furthermore, for example, the present embodiment can adopt a composition of cloud computing in which one function is cooperatively shared and processed by a plurality of devices or devices via a network.

### <<6. Conclusion>>

As described above, the communication apparatus (for example, the base station 20 or the terminal apparatus 40) according to the present embodiment performs LCM of the AI/ML model based on the functionality. For example, the communication apparatus implements LCM of the AI/ML model for each use case or for each function. For example, the communication apparatus implements the LCM of at least one of the plurality of functionalities independently of the LCM of the other functionalities. Alternatively, the communication apparatus performs LCM of all functionalities in association with each other. Alternatively, the communication apparatus performs management (LCM) of some of the plurality of functionalities in association with each other.

In this manner, in the present embodiment, the management of the AI/ML model is performed based on the functionality. This makes it possible for the communication apparatus to perform efficient management of the AI/ML model, leading to achievement of high communication performance.

The embodiments of the present disclosure have been described above. However, the technical scope of the present disclosure is not limited to the above-described embodiments, and various modifications can be made without departing from the scope of the present disclosure. Moreover, it is allowable to combine the components across different embodiments and modifications as appropriate.

The effects described in individual embodiments of the present specification are merely examples, and thus, there may be other effects, not limited to the exemplified effects.

Note that the present technology can also have the following configurations.
(1) A communication apparatus capable of executing processing of a plurality of functionalities related to communication with another communication apparatus, the communication apparatus comprising
   a management unit configured to perform management of an AI/ML model used in the processing, based on the functionalities.
(2) The communication apparatus according to (1), wherein
   the management of at least one of the plurality of functionalities is performed independently of the management of the other functionalities.
(3) The communication apparatus according to (1), wherein
   the management of all of the plurality of functionalities is performed in association with each other.
(4) The communication apparatus according to (1), wherein
   the management of some of the plurality of functionalities is performed in association with each other.
(5) The communication apparatus according to any one of (1) to (4), wherein
   the management includes a plurality of management functions including a first management function, and
   the first management function included in the management of at least one of the plurality of functionalities is implemented in association with the first management function included in the management of the other functionalities.
(6) The communication apparatus according to any one of (1) to (5), wherein
   the management includes a plurality of management functions including a second management function, and
   the second management function included in the management of at least one of the plurality of functionalities is implemented independently of the second management function included in the management of the another one or a plurality of functionalities.
(7) The communication apparatus according to any one of (1) to (6), comprising
   a decision unit configured to make a decision related to association of the management among the plurality of functionalities.
(8) The communication apparatus according to (7), wherein
   the decision unit makes the decision related to the association of the management based on information from the another communication apparatus.
(9) The communication apparatus according to (7) or (8), comprising
   a transmission unit configured to transmit the decision made by the decision unit to the another communication apparatus.
(10) The communication apparatus according to any one of (1) to (6), wherein
   the plurality of functionalities are functionalities related to communication with another communication apparatus capable of making a decision related to association of the management among the plurality of functionalities, and
   the communication apparatus comprises a reception unit configured to receive the decision made by the another communication apparatus from the another communication apparatus.
(11) The communication apparatus according to (7) or (8), wherein
   the communication apparatus is a base station or a terminal apparatus, and
   the communication apparatus comprises an acquisition unit configured to acquire information necessary for performing the management, from a core network.
(12) The communication apparatus according to any one of (1) to (11), wherein
   the communication apparatus comprises:
   an acquisition unit configured to acquire information related to the management; and
   a discerning unit configured to discern the functionalities to which the management indicated by the information related to the management is applied.
(13) The communication apparatus according to (12), wherein
   the information related to the management includes identification information of the AI/ML model notified from the another communication apparatus, and
   the discerning unit discerns the functionalities to which the management indicated by the information related to the management is applied, based on the identification information of the AI/ML model.
(14) The communication apparatus according to (12), wherein
   the information related to the management is notified from the another communication apparatus by a different message, a different information field, or a different information element for each of the functionalities, and
   the discerning unit discerns the functionalities to which the management indicated by the information related to the management is applied, based on the message, the information field, or the information element.
(15) The communication apparatus according to any one of (1) to (11), wherein
   the communication apparatus comprises:
   an acquisition unit configured to acquire capability information of the another communication apparatus; and
   a discerning unit configured to discern the functionalities applicable to the another communication apparatus, based on the capability information.
(16) The communication apparatus according to any one of (1) to (15), wherein
   the management unit performs the management at a timing when a predetermined event occurs or at a predetermined temporal timing.
(17) The communication apparatus according to any one of (1) to (15), wherein
   the management unit performs the management at a timing of receiving a notification from the another communication apparatus, the notification being performed at a timing when a predetermined event occurs or at a predetermined temporal timing.
(18) The communication apparatus according to any one of (1) to (17), wherein
   the communication apparatus is a base station that communicates with a terminal apparatus, and
   the communication apparatus comprises a notification unit configured to, when the terminal apparatus performs handover to another base station, notify the another base station of information related to the management.
(19) The communication apparatus according to any one of (1) to (17), wherein
   the communication apparatus is a base station that communicates with a terminal apparatus, and
   the management unit performs management based on information related to the management acquired from another base station when the terminal apparatus performs handover from the another base station to the communication apparatus.
(20) A communication method executed by a communication apparatus capable of executing processing of a plurality of functionalities related to communication with another communication apparatus, the communication method comprising
   performing management of an AI/ML model used in the processing, based on the functionalities.

### Reference Signs List

1 COMMUNICATION SYSTEM
10 MANAGEMENT APPARATUS
20 BASE STATION
30 RELAY STATION
40 TERMINAL APPARATUS
11 COMMUNICATION UNIT
21, 31, 41 WIRELESS COMMUNICATION UNIT
12, 22, 32, 42 STORAGE UNIT
13, 23, 33, 43 CONTROL UNIT
211, 311, 411 TRANSMISSION PROCESSING UNIT
212, 312, 412 RECEPTION PROCESSING UNIT
213, 313, 413 ANTENNA
231, 331, 431 ACQUISITION UNIT
232, 332, 432 MANAGEMENT UNIT
233, 333, 433 DISCERNING UNIT
234, 334, 434 DECISION UNIT
235, 335, 435 TRANSMISSION UNIT
236, 336, 436 RECEPTION UNIT
520 USER PLANE FUNCTION GROUP
540 CONTROL PLANE FUNCTION GROUP
551 MTLF
552, 553 MEC SERVER
554 LCM-RELATED NETWORK FUNCTION
RAN RADIO ACCESS NETWORK
CN CORE NETWORK

## Claims

1. A communication apparatus capable of executing processing of a plurality of functionalities related to communication with another communication apparatus, the communication apparatus comprising
a management unit configured to perform management of an AI/ML model used in the processing, based on the functionalities.

2. The communication apparatus according to claim 1, wherein
the management of at least one of the plurality of functionalities is performed independently of the management of the other functionalities.

3. The communication apparatus according to claim 1, wherein
the management of all of the plurality of functionalities is performed in association with each other.

4. The communication apparatus according to claim 1, wherein
the management of some of the plurality of functionalities is performed in association with each other.

5. The communication apparatus according to claim 1, wherein
the management includes a plurality of management functions including a first management function, and
the first management function included in the management of at least one of the plurality of functionalities is implemented in association with the first management function included in the management of the other functionalities.

6. The communication apparatus according to claim 1, wherein
the management includes a plurality of management functions including a second management function, and
the second management function included in the management of at least one of the plurality of functionalities is implemented independently of the second management function included in the management of the another one or a plurality of functionalities.

7. The communication apparatus according to claim 1, comprising
a decision unit configured to make a decision related to association of the management among the plurality of functionalities.

8. The communication apparatus according to claim 7, wherein
the decision unit makes the decision related to the association of the management based on information from the another communication apparatus.

9. The communication apparatus according to claim 7, comprising
a transmission unit configured to transmit the decision made by the decision unit to the another communication apparatus.

10. The communication apparatus according to claim 1, wherein
the plurality of functionalities are functionalities related to communication with another communication apparatus capable of making a decision related to association of the management among the plurality of functionalities, and
the communication apparatus comprises a reception unit configured to receive the decision made by the another communication apparatus from the another communication apparatus.

11. The communication apparatus according to claim 7, wherein
the communication apparatus is a base station or a terminal apparatus, and
the communication apparatus comprises an acquisition unit configured to acquire information necessary for performing the management, from a core network.

12. The communication apparatus according to claim 1, wherein
the communication apparatus comprises:
an acquisition unit configured to acquire information related to the management; and
a discerning unit configured to discern the functionalities to which the management indicated by the information related to the management is applied.

13. The communication apparatus according to claim 12, wherein
the information related to the management includes identification information of the AI/ML model notified from the another communication apparatus, and
the discerning unit discerns the functionalities to which the management indicated by the information related to the management is applied, based on the identification information of the AI/ML model.

14. The communication apparatus according to claim 12, wherein
the information related to the management is notified from the another communication apparatus by a different message, a different information field, or a different information element for each of the functionalities, and
the discerning unit discerns the functionalities to which the management indicated by the information related to the management is applied, based on the message, the information field, or the information element.

15. The communication apparatus according to claim 1, wherein
the communication apparatus comprises:
an acquisition unit configured to acquire capability information of the another communication apparatus; and
a discerning unit configured to discern the functionalities applicable to the another communication apparatus, based on the capability information.

16. The communication apparatus according to claim 1, wherein
the management unit performs the management at a timing when a predetermined event occurs or at a predetermined temporal timing.

17. The communication apparatus according to claim 1, wherein
the management unit performs the management at a timing of receiving a notification from the another communication apparatus, the notification being performed at a timing when a predetermined event occurs or at a predetermined temporal timing.

18. The communication apparatus according to claim 1, wherein
the communication apparatus is a base station that communicates with a terminal apparatus, and
the communication apparatus comprises a notification unit configured to, when the terminal apparatus performs handover to another base station, notify the another base station of information related to the management.

19. The communication apparatus according to claim 1, wherein
the communication apparatus is a base station that communicates with a terminal apparatus, and
the management unit performs management based on information related to the management acquired from another base station when the terminal apparatus performs handover from the another base station to the communication apparatus.

20. A communication method executed by a communication apparatus capable of executing processing of a plurality of functionalities related to communication with another communication apparatus, the communication method comprising
performing management of an AI/ML model used in the processing, based on the functionalities.
